(19) Europäisches Patentamt
European Patent Office
Office européen des brevets

(11) EP 1 028 982 B1

(12) EUROPEAN PATENT SPECIFICATION

(45) Date of publication and mention of the grant of the patent:
**29.10.2003 Bulletin 2003/44**

(21) Application number: **98957751.5**

(22) Date of filing: **10.11.1998**

(51) Int Cl.[7]: **C08C 19/44**, C08F 8/00

(86) International application number:
**PCT/US98/23924**

(87) International publication number:
**WO 99/025740 (27.05.1999 Gazette 1999/21)**

# (54) COMPOSITIONS PROVIDING IMPROVED FUNCTIONALIZATION OF TERMINAL ANIONS AND PROCESSES FOR IMPROVED FUNCTIONALIZATION OF TERMINAL ANIONS

ZUSAMMENSETZUNG MIT VERBESSERTER FUNKTIONALISIERUNG VON ANIONISCHEN ENDGRUPPEN UND VERFAHREN ZUR VERBESSERUNG DER FUNKTIONALISIERUNG VON ANIONISCHEN ENDGRUPPEN

COMPOSITIONS PERMETTANT UNE MEILLEURE FONCTIONNALISATION D'ANIONS TERMINAUX ET PROCEDES ASSOCIES

(84) Designated Contracting States:
**AT BE CH CY DE DK ES FI FR GB GR IE IT LI LU MC NL PT SE**

(30) Priority: **14.11.1997 US 65858 P**

(43) Date of publication of application:
**23.08.2000 Bulletin 2000/34**

(73) Proprietor: **FMC CORPORATION**
**Philadelphia, PA 19103 (US)**

(72) Inventors:
- **QUIRK, Roderic, Paul**
  **Akron, OH 44313 (US)**
- **LEE, Young, Joon**
  **Cuyahoga Falls, OH 44221 (US)**
- **SCHWINDEMAN, James, Anthony**
  **Lincolnton, NC 28092 (US)**
- **LETCHFORD, Robert, James**
  **Cherryville, NC 28021 (US)**

(74) Representative: **Patentanwälte**
**Schaad, Balass, Menzl & Partner AG**
**Dufourstrasse 101**
**Postfach**
**8034 Zürich (CH)**

(56) References cited:
**WO-A-90/09403**
**WO-A-97/06192**
**WO-A-98/02465**
**FR-A- 1 554 878**
**US-A- 3 764 760**

- **H L HSIEH: "ANIONIC POLYMERIZATION: PRINCIPLES AND PRACTICAL APPLICATIONS" 1996 , M DEKKER , NEW YORK, US XP002094604 cited in the application see page 261, line 11 - page 306, line 16 see page 262, line 11 - line 16 see page 265, line 7 - line 11**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the Invention

This invention relates to novel compositions of an anionic polymerization initiator and an additive which enhance functionalization of living polymer anions; novel compositions of electrophiles and an additive which enhance functionalization of living polymer anions; and processes which employ these compositions, or an additive, for improved efficiency in the functionalization of living polymer anions.

### Background of the Invention

Polymers that contain terminal functional groups are industrially important. One technique to prepare these terminally functionalized polymers is by reaction of a suitable electrophile with a living polymer anion. For numerous examples of end group functionalization chemistry, see Hsieh, H. L.; Quirk, R. P. *Anionic Polymerization: Principles and Practical Applications;* Marcel Dekker: New York, NY, 1996, pages 261-306.

Some of these functionalization reactions are not very efficient, particularly for the preparation of telechelic polymers, due to the formation of a thick gel during the functionalization. This leads to lower capping efficiency. See, for example, U. S. Patent No. 5,393,843, Example 1, wherein the capping efficiency was only 82%.

A recently reported terminal functionalization technique uses a protected functionalized electrophile. For instance, Nakahama and co-workers have described the reaction of polystyryllithium with the electrophile $Br-(CH_2)_3C(OCH_3)_3$, a protected carboxyl group. See Hirao, A.; Nagahama, H. Ishizone, T.; Nakahama, S. *Macromolecules,* **1993,** *26*, 2145. Excellent terminal functionalization of the living anion was achieved (>95%). Other examples of efficient functionalization with protected functionalized electrophiles are reported in Ueda, K.; Hirao, A.; S. Nakahama, S. *Macromolecules*, **1990,** *23*, 939; Tohyama, M.; Hirao, A.; Nakahama, S. *Macromol. Chem. Phys.* **1996,** *197*, 3135, and Labeau, M.P.; Cramail, H.; Deffieux, A. *Polymer International*, **1996**, *41*, 453.

To obtain efficient functionalization, these functionalization reactions are conducted in tetrahydrofuran (THF) at -80°C. THF, however, is an expensive solvent, and these low-temperature conditions are not practical on an industrial scale. In addition, efficient functionalization of polymer anions was only observed with expensive alkyl bromides.

### Summary of the Invention

The present invention provides compositions capable of increasing efficiencies in the functionalization of living polymer anions. The compositions include as a component one or more additives, such as an alkali halide or alkali alkoxide. The inventors have unexpectedly found that the additives are capable of improving the efficiency of reactions between polymer anions and electrophiles, as compared to similar reactions in the absence of an additive. In one aspect of the invention, the compositions include one or more anionic polymerization initiators and one or more salt additives for increasing the efficiency of reactions between living polymer anions and electrophiles, said salt additive in an amount of at least 0.01 equivalents of the electrophiles and consisting of alkali halides, alkali alkoxides and mixtures thereof. Exemplary anionic polymerization initiators include non-functionalized and functionalized organoalkali metal initiators. In another aspect of the invention, the compositions include one or more salt additives and one or more electrophiles useful for functionalizing living polymers said salt additive in an amount of at least 0.01 equivalents of the one or more electrophiles and selected from the group consisting of alkalinalides, alkali alkoxides, and mixtures thereof.

Processes for improving living polymer anion functionalization are also provided. In this aspect of the invention, a living polymer anion is functionalized using a suitable electrophile in the presence of one or more salt additives as described above, said salt additive in an amount of at least 0.01 equivalents of the one or more electrophiles and selected from the group consisting of alkalinalides, alkali alkoxides and mixtures thereof. Higher yields of functionalized polymers were observed when the additive was employed. In addition, the employment of the additive allowed the functionalization to be performed in hydrocarbon solvent at room temperature. Further, these reaction conditions are much less expensive on a commercial scale, as compared to the prior art. The invention can also be used with a variety of monomers and/or functionalizing agents. For example, it was discovered that the less expensive, and more readily available, alkyl chlorides afford efficient functionalization when an additive is employed.

Yet another embodiment of the invention provides novel electrohiles. The novel electrophiles have the formula

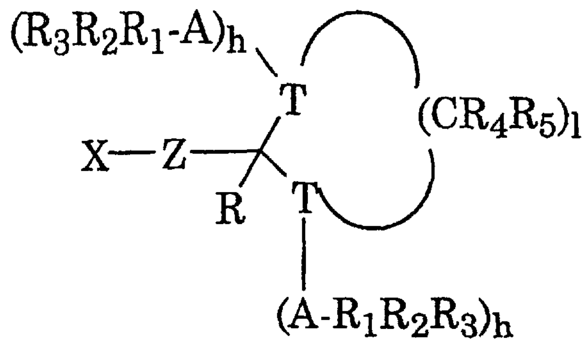

wherein:

X is halogen selected from chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, nitrogen, and mixtures thereof;
$(A - R_1R_2R_3)$ is a protecting group, in which A is an element selected from Group IVa of the Periodic Table of the Elements and $R_1$, $R_2$, and $R_3$ are each independently selected from the group consisting of hydrogen, alkyl, substituted alkyl, aryl, substituted aryl, cycloalkyl, and substituted cycloalkyl;
R, $R_4$, and $R_5$ are each independently selected from the group consisting of hydrogen, alkyl, substituted alkyl, aryl, substituted aryl, cycloalkyl, and substituted cycloalkyl;
h is 0 when T is oxygen or sulfur, and 1 when T is nitrogen; and
l is an integer from 1 to 7.

## Detailed Description of the Invention

Additives useful in the invention include, alkali halides, such as lithium chloride, lithium bromide, lithium iodide, sodium chloride, sodium iodide, potassium chloride, and mixtures thereof; alkali alkoxides, such as lithium t-butoxide, lithium s-butoxide, potassium t-butoxide, and mixtures thereof; and the like and mixtures thereof. The additives should be dried, prior to use.

Several factors influence the amount of additive required, such as the nature of the polymer anion; the identity of the hydrocarbon solvent; the presence of a polar additive (co-solvent); the amount of the polar additive; the nature of the electrophile; and the identity of the additive. An effective amount of the additive employed is from as little as 0.01 equivalents of the electrophile, up to greater than five equivalents again based on the electrophile. In general, less than ten equivalents of the additive are effective for increasing the efficiency of the functionalization reaction.

In one aspect of the invention, the compositions can include one or more organoalkali metal anionic polymerization initiators. Exemplary anionic polymerization initiators include alkyllithium initiatiors represented by the formula R'-Li, wherein R' represents an aliphatic, cycloaliphatic, or arylsubstituted aliphatic radical. Preferably, R' is an alkyl or substituted alkyl group of 1-12 carbon atoms. Such initiators include, but are not limited to, methyllithium, ethyllithium, n-propyllithium, 2-propyllithium, n-butyllithium, s-butyllithium, t-butyllithium, n-hexyllithium, 2-ethylhexyllithium, and the like and mixtures thereof. As used herein, alkyllithium initiators also include dilithium initiators as known in the art. See, for example, U. S. Patent Nos. 5,393,843 and 5,405,911. Dilithium initiators can be prepared by the reaction of an alkyllithium reagent, such as s-butyllithium, with a compound having at least two independently polymerizable vinyl groups, such as the isomeric divinylbenzenes or isomeric diisopropenylbenzenes.

One or more functionalized organoalkali metal initiators may also be employed in the compositions of the invention. These functionalized initiators have the general structure shown below:

$$M\text{-}Q_n\text{-}Z\text{-}T\text{-}(A\text{-}R^7R^8R^9)_m \qquad (I)$$

or

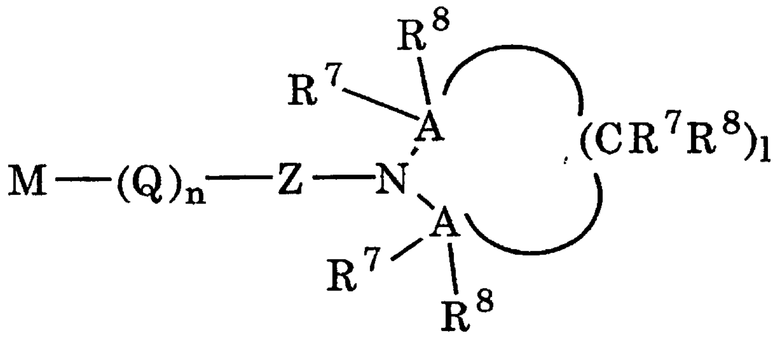

(II)

wherein:

M is an alkali metal selected from the group consisting of lithium, sodium and potassium;
Q is an unsaturated hydrocarbyl group derived by incorporation of one or more conjugated diene hydrocarbons, one or more alkenylsubstituted aromatic compounds, or mixtures of one or more dienes with one or more alkenylsubstituted aromatic compounds into the M-Z linkage;
n is an integer from 0 to 5;
Z is a branched or straight chain hydrocarbon connecting group which contains 3-25 carbon atoms, optionally substituted with aryl or substituted aryl;
T is selected from the group consisting of oxygen, sulfur, and nitrogen groups and mixtures thereof;
$(A\text{-}R^7R^8R^9)_m$ is a protecting group in which A is an element selected from Group IVa of the Periodic Table of the Elements, and $R^7$, $R^8$, and $R^9$ are each independently selected from the group consisting of hydrogen, alkyl, substituted alkyl, aryl, substituted aryl, cycloalkyl, and substituted cycloalkyl;
l is an integer from 1 to 7; and
m is 1 when T is oxygen or sulfur, and 2 when T is nitrogen.

As used herein, the term "alkyl" refers to straight chain and branched C1-C25 alkyl. The term "substituted alkyl" refers to C1-C25 alkyl substituted with one or more lower C1-C10 alkyl, lower alkoxy, lower alkylthio, or lower dialkylamino. The term "cycloalkyl" refers to C3-C12 cycloalkyl. The term "substituted cycloalkyl" refers to C3-C12 cycloalkyl substituted with one or more lower C1-C10 alkyl, lower alkoxy, lower alkylthio, or lower dialkylamino. The term "aryl" refers to C5-C25 aryl having one or more aromatic rings, each of 5 or 6 carbon atoms. Multiple aryl rings may be fused, as in naphthyl or unfused, as in biphenyl. The term "substituted aryl" refers to C5-C25 aryl substituted with one or more lower C1-C10 alkyl, lower alkoxy, lower alkylthio, or lower dialkylamino. Exemplary aryl and substituted aryl groups include, for example, phenyl, benzyl, and the like.

U.S. Patents 5,496,940 and 5,527,753 disclose novel, tertiary amino initiators which are soluble in hydrocarbon solvents. These initiators, useful in practicing this invention, are derived from omega-tertiary-amino-1-haloalkanes of the following general structures:

$$X\text{-}Z\text{-}N(A(R^1R^2R^3))_2$$

and

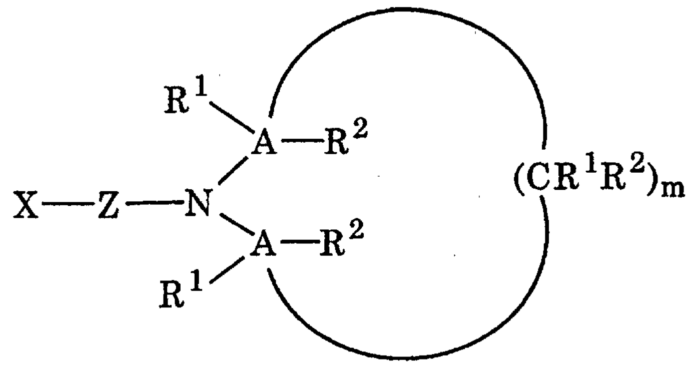

wherein X is defined as a halogen, preferably chlorine or bromine; Z is defined as a branched or straight chain hydrocarbon connecting group which contains 3-25 carbon atoms; A is an element selected from Group IVa of the Periodic Table of the Elements, $R^1$, $R^2$ and $R^3$ are independently defined as hydrogen, alkyl, substituted alkyl groups containing lower alkyl, lower alkylthio, and lower dialkylamino groups, aryl or substituted aryl groups containing lower alkyl, lower alkylthio, and lower dialkylamino groups, or cycloalkyl and substituted cycloalkyl groups containing 5 to 12 carbon atoms, and m is an integer from 1 to 7. The process reacts selected omega-tertiary-amino-1-haloalkanes whose alkyl groups contain 3 to 25 carbon atoms, with lithium metal at a temperature between about 35 °C and about 130 °C, preferably at the reflux temperature of an alkane, cycloalkane, or aromatic reaction solvent containing 5 to 10 carbon atoms and mixtures of such solvents.

Tertiary amino-1-haloalkanes useful in the practice of this invention include, but are not limited to, 3-(N,N-dimethylamino)-1-propyl halide, 3-(N,N-dimethylamino)-2-methyl-1-propyl halide, 3-(N,N-dimethylamino)-2,2-dimethyl-1-propyl halide, 4-(N,N-dimethylamino)-1-butyl halide, 5-(N,N-dimethylamino)-1-pentyl halide, 6-(N,N-dimethylamino)-1-hexyl halide, 3-(N,N-diethylamino)-1-propyl halide, 3-(N,N-diethylamino)-2-methyl-1-propyl halide, 3-(N,N-diethylamino)-2,2-dimethyl-1-propyl halide, 4-(N,N-diethylamino)-1-butyl halide, 5-(N,N-diethylamino)-1-pentyl halide, 6-(N,N-diethylamino)-1-hexyl halide, 3-(N-ethyl-N-methylamino)-1-propyl halide, 3-(N-ethyl-N-methylamino)-2-methyl-1-propyl halide, 3-(N-ethyl-N-methylamino)-2,2-dimethyl-1-propyl halide, 4-(N-ethyl-N-methylamino)-1-butyl halide, 5-(N-ethyl-N-methylamino)-1-pentyl halide, 6-(N-ethyl-N-methylamino)-1-hexyl halide, 3-(piperidino)-1-propyl halide, 3-(piperidino)-2-methyl-1-propyl halide, 3-(piperidino)-2,2-dimethyl-1-propyl halide, 4-(piperidino)-1-butyl halide, 5-(piperidino)-1-pentyl halide, 6-(piperidino)-1-hexyl halide, 3-(pyrrolidino)-1-propyl halide, 3-(pyrrolidino)-2-methyl-1-propyl halide, 3-(pyrrolidino)-2,2-dimethyl-1-propyl halide, 4-(pyrrolidino)-1-butyl halide, 5-(pyrrolidino)-1-pentyl halide, 6-(pyrrolidino)-1-hexyl halide, 3-(hexamethyleneimino)-1-propyl halide, 3-(hexamethyleneimino)-2-methyl-1-propyl halide, 3-(hexamethyleneimino)-2,2-dimethyl-1-propyl halide, 4-(hexamethyleneimino)-1-butyl halide, 5-(hexamethyleneimino)-1-pentyl halide, 6-(hexamethyleneimino)-1-hexyl halide, 3-(2,2,5,5-tetramethyl-2,5-disila-1-azacyclopentane)-1-propyl halide, 4-(2,2,5,5-tetramethyl-2,5-disila-1-azacyclopentane)-1-butyl halide, 6-(2,2,5,5-tetramethyl-2,5-disila-1-azacyclopentane)-1-hexyl halide, 3-(N-isopropyl-N-methyl)-1-propyl halide, 2-(N-isopropyl-N-methyl)-2-methyl-1-propyl halide, 3-(N-isopropyl-N-methyl)-2,2-dimethyl-1-propyl halide, and 4-(N-isopoopyl-N-methyl)-1-butyl halide. The halo- or halide group is selected from chlorine and bromine.

U.S. Patent 5,600,021 discloses novel monofunctional ether initiators which are soluble in hydrocarbon solvents. These initiators, useful in practicing this invention, are derived from omega-protected-hydroxy-1-haloalkanes of the following general structure:

$$X\text{-}Z\text{-}O\text{-}(C\text{-}R^1R^2R^3)$$

wherein X is defined as a halogen, preferably chlorine or bromine; Z is a branched or straight chain hydrocarbon group which contains 3-25 carbon atoms, $R^1$, $R^2$ and $R^3$ are independently defined as hydrogen, alkyl, substituted alkyl groups containing lower alkyl, lower alkylthio, and lower dialkylamino groups, aryl or substituted aryl groups containing lower alkyl, lower alkylthio, and lower dialkylamino groups, or cycloalkyl and substituted cycloalkyl groups containing 5 to 12 carbon atoms. The process reacts selected omega-hydroxy-protected-1-haloalkanes whose alkyl groups contain 3 to 25 carbon atoms, with lithium metal at a temperature between about 35 °C and about 130 °C, preferably at the reflux temperature of an alkane, cycloalkane, or aromatic reaction solvent containing 5 to 10 carbon atoms and mixtures of such solvents.

The precursor omega-protected-1-haloalkanes (halides) were prepared from the corresponding haloalcohol by the standard literature methods. For example, 3-(1,1-dimethylethoxy)-1-chloropropane was synthesized by the reaction of 3-chloro-1-propanol with 2-methylpropene according to the method of A. Alexakis, M. Gardette, and S. Colin, Tetrahedron Letters, 29, 1988, 2951. The method of B. Figadere, X. Franck and A. Cave, Tetrahedron Letters, 34, 1993, 5893, which involved the reaction of the appropriate alcohol with 2-methyl-2-butene catalyzed by boron trifluoride etherate is employed for the preparation of the t-amyl ethers. The alkoxy, alkylthio or dialkylamino substituted ethers, for example 6-[3-(methylthio)-1-propyloxy]-1-chlorohexane, were synthesized by reaction of the corresponding substituted alcohol, for instance 3-methylthio-1-propanol, with an alpha-bromo-omega-chloroalkane, for instance 1-bromo-6-hexane, according to the method of J. Almena, F. Foubelo and M. Yus, Tetrahedron, 51, 1995, 11883. The compound 4-(methoxy)-1-chlorobutane, and the higher analogs, were synthesized by the ring opening reaction of tetrahydrofuran with thionyl chloride and methanol, according to the procedure of T. Ferrari and P. Vogel, SYNLETT, 1991, 233. The triphenylmethyl protected compounds, for example 3-(triphenylmethoxy)-1-chloropropane, are prepared by the reaction of the haloalcohol with triphenylmethylchloride, according to the method of S. K. Chaudhary and O. Hernandez, Tetrahedron Letters, 1979, 95.

Omega-hydroxy-protected-1-haloalkanes prepared in accord with this earlier process useful in practicing this invention can include, but are not limited to, 3-(1,1-dimethylethoxy)-1-propyl halide, 3-(1,1-dimethylethoxy)-2-methyl-1-propyl halide, 3-(1,1-dimethylethoxy)-2,2-dimethyl-1-propyl halide, 4-(1,1-dimethylethoxy)-1-butyl halide, 5-(1,1-dimethylethoxy)-1-pentyl halide, 6-(1,1-dimethylethoxy)-1-hexyl halide, 8-(1,1-dimethylethoxy)-l-octyl halide, 3-(1,1-dimethylpropoxy)-1-propyl halide, 3-(1,1-dimethylpropoxy)-2-methyl-1-propyl halide, 3-(1,1-dimethylpropoxy)-2,2-dimethyl-1-propyl halide, 4-(1,1-dimethylpropoxy)-1-butyl halide, 5-(1,1-dimethylpropoxy)-1-pentyl halide, 6-(1,1-dimethylpropoxy)-1-hexyl halide, 8-(1,1-dimethylpropoxy)-1-octyl halide, 4-(methoxy)-1-butyl halide, 4-(ethoxy)-1-butyl halide, 4-(propyloxy)-1-butyl halide, 4-(1-methylethoxy)-1-butyl halide, 3-(triphenylmethoxy)-2,2-dimethyl-1-propyl halide, 4-(triphenylmethoxy)-1-butyl halide, 3-[3-(dimethylamino)-1-propyloxy]-1-propyl halide, 3-[2-(dimethylamino)-1-ethoxy]-1-propyl halide, 3-[2-(diethylamino)-1-ethoxy]-1-propyl halide, 3-[2-(diisopropyl)amino)-1-ethoxy]-1-propyl halide, 3-[2-(1-piperidino)-1-ethoxy]-1-propyl halide, 3-[2-(1-pyrrolidino)-1-ethoxy]-1-propyl halide, 4-[3-(dimethylamino)-1-propyloxy]-1-butyl halide, 6-[2-(1-piperidino)-1-ethoxy]-1-hexyl halide, 3-[2-(methoxy)-1-ethoxy]-1-propyl halide, 3-[2-(ethoxy)-1-ethoxy]-1-propyl halide, 4-[2-(methoxy)-1-ethoxy]-1-butyl halide, 5-[2-(ethoxy)-1-ethoxy]-1-pentyl halide, 3-[3-(methylthio)-1-propyloxy]-1-propyl halide, 3-[4-(methylthio)-1-butyloxy]-1-propyl halide, 3-(methylthiomethoxy)-1-propyl halide, 6-[3-(methylthio)-1-propyloxy]-1-hexyl halide, 3-[4-(methoxy)-benzyloxy]-1-propyl halide, 3-[4-(1,1-dimethylethoxy)-benzyloxy]-1-propyl halide, 3-[2,4-(dimethoxy)-benzyloxy]-1-propyl halide, 8-[4-(methoxy)-benzyloxy]-1-octyl halide, 4-[4-(methylthio)-benzyloxy]-1-butyl halide, 3-[4-(dimethylamino)-benzyloxy]-1-propyl halide, 6-[4-(dimethylamino)-benzyloxy]-1-hexyl halide, 5-(triphenylmethoxy)-1-pentyl halide, 6-(triphenylmethoxy)-1-hexyl halide, and 8-(triphenylmethoxy)-1-octyl halide. The halo- or halide group is selected from chlorine and bromine.

U.S. Patent 5,362,699 discloses novel monofunctional silyl ether initiators which are soluble in hydrocarbon solvents. These initiators, useful in practicing this invention, are derived from omega-silyl-protected-hydroxy-1-haloalkanes of the following general structure:

$$X\text{-}Z\text{-}O\text{-}(Si\text{-}R^1R^2R^3)$$

wherein X is defined as a halogen, preferably chlorine or bromine; Z is a branched or straight chain hydrocarbon group which contains 3-25 carbon atoms, optionally containing aryl or substituted aryl groups; and $R^1$, $R^2$, and $R^3$ are independently defined as saturated and unsaturated aliphatic and aromatic radicals, and their employment as initiators in the anionic polymerization of olefin containing monomers in an inert, hydrocarbon solvent optionally containing a Lewis base. The process reacts selected omega-hydroxy-protected-1-haloalkanes whose alkyl groups contain 3 to 25 carbon atoms, with lithium metal at a temperature between about 25 °C and about 40 °C, in an alkane, cycloalkane or aromatic reaction solvent containing 5 to 10 carbon atoms and mixtures of such solvents.

t-Butyldimethylsilyl protected compounds, for example 4-(t-butyldimethylsilyloxy)-1-butylhalide, are prepared from t-butyldimethylchlorosilane, and the corresponding halo-alcohol, according to the method described in U. S. Patent No. 5,493,044. Omega-silyloxy-1-haloalkanes prepared in accord with this earlier process useful in practicing this invention can include, but are not limited to, 3-(t-butyldimethylsilyloxy)-1-propyl halide, 3-(t-butyldimethyl-silyloxy)-2-methyl-1-propyl halide, 3-(t-butyldimethylsilyloxy)-2,2-dimethyl-1-propyl halide, 4-(t-butyldimethylsilyloxy)-1-butyl halide, 5-(t-butyldimethyl-silyloxy)-1-pentyl halide, 6-(t-butyldimethylsilyloxy)-1-hexyl halide, 8-(t-butyldimethylsilyloxy)-1-octyl halide, 3-(t-butyldiphenylylsilyloxy)-1-propyl halide, 3-(t-butyldiphenylylsilyloxy)-2-methyl-1-propyl halide, 3-(t-butyldiphenylylsilyloxy)-2,2-dimethyl-1-propyl halide, 6-(t-butyldimethylsilyloxy)-1-hexyl halide, and 3-(trimethylsilyloxy)-2,2-dimethyl-1-propyl halide. The halo- or halide group is selected from chlorine and bromine.

Monofunctional thioether initiators useful in the practice of this invention are derived from omega-protected-thio-1-haloalkanes of the following general structure:

$$X\text{-}Z\text{-}S\text{-}(A\text{-}R^1R^2R^3)$$

wherein X is defined as a halogen, preferably chlorine or bromine; Z is a branched or straight chain hydrocarbon group which contains 3-25 carbon atoms; ($A\text{-}R^1R^2R^3$) is a protecting group in which A is an element selected from Group IVa of the Periodic Table of the Elements; $R^1$, $R^2$, and $R^3$ are independently defined as hydrogen, alkyl, substituted alkyl groups containing lower alkyl, lower alkylthio, and lower dialkylamino groups, aryl or substituted aryl groups containing lower alkyl, lower alkylthio, and lower dialkylamino groups, or cycloalkyl and substituted cycloalkyl groups containing 5 to 12 carbon atoms. The process reacts selected omega-thioprotected-1-haloalkyls whose alkyl groups contain 3 to 25 carbon atoms, with lithium metal at a temperature between about 35 °C and about 130 °C, preferably at the reflux temperature of an alkane, cycloalkane or aromatic reaction solvent containing 5 to 10 carbon atoms and mixtures of such solvents.

The initiator precursor, omega-thio-protected-1-haloalkanes (halides), are prepared from the corresponding halothiol by the standard literature methods. For example, 3-(1,1-dimethylethylthio)-1-propylchloride is synthesized by the reaction of 3-chloro-1-propanthiol with 2-methylpropene according to the method of A. Alexakis, M. Gardette, and S. Colin, Tetrahedron Letters, 29, 1988, 2951. Alternatively, reaction of 1,1-dimethylethylthiol with 1-bromo-3-chloropropane and a base affords 3-(1,1-dimethylethylthio)-1-propylchloride. The method of B. Figadere, X. Franck and A. Cave, Tetrahedron Letters, 34, 1993, 5893, which involved the reaction of the appropriate thiol with 2-methyl-2-butene catalyzed by boron trifluoride etherate is employed for the preparation of the t-amyl thioethers. Additionally, 5-(cyclohexylthio)-1-pentylhalide and the like, can be prepared by the method of J. Almena, F. Foubelo, and M. Yus, Tetrahedron, 51, 1995, 11883. This synthesis involves the reaction of the appropriate thiol with an alkyllithium, then reaction of the lithium salt with the corresponding alpha, omega dihalide. 3-(Methylthio)-1-propylchloride can be prepared by chlorination of the corresponding alcohol with thionyl chloride, as taught by D. F. Taber and Y. Wang, J. Org, Chem., 58, 1993, 6470. Methoxymethylthio compounds, such as 6-(methoxymethylthio)-1-hexylchloride, are prepared by the reaction of the omega-chloro-thiol with bromochloromethane, methanol, and potassium hydroxide, by the method of F. D. Toste and I. W. J. Still, Synlett, 1995, 159. t-Butyldimethylsilyl protected compounds, for example 4-(t-butyldimethylsilylthio)-1-butylhalide, are prepared from t-butyldimethylchlorosilane, and the corresponding thiol, according to the method described in U. S. Patent No. 5,493,044.

Omega-thio-protected 1-haloalkanes prepared in accord with this earlier process useful in practicing this invention can include, but are not limited to, 3-(methylthio)-1-propylhalide, 3-(methylthio)-2-methyl-1-propylhalide, 3-(methylthio)-2,2-dimethyl-1-propylhalide, 4-(methylthio)-1-butylhalide, 5-(methylthio)-1-pentylhalide, 6-(methylthio)-1-hexylhalide, 8-(methylthio)-1-octylhalide, 3-(methoxymethylthio)-1-propylhalide, 3-(methoxymethylthio)-2-methyl-1-propylhalide, 3-(methoxymethylthio)-2,2-dimethyl-1-propylhalide, 4-(methoxymethylthio)-1-butylhalide, 5-(methoxymethylthio)-1-pentylhalide, 6-(methoxymethylthio)-1-hexylhalide, 8-(methoxymethylthio)-1-octylhalide, 3-(1,1-dimethylethylthio)-1-propylhalide, 3-(1,1-dimethylethylthio)-2-methyl-1-propylhalide, 3-(1,1-dimethylethylthio)-2,2-dimethyl-1-propylhalide, 4-(1,1-dimethylethylthio)-1-butylhalide, 5-(1,1-dimethylethylthio)-1-pentylhalide, 6-(1,1-dimethylethylthio)-1-hexylhalide, 8-(1,1-dimethylethylthio)-1-octylhalide, 3-(1,1-dimethylpropylthio)-1-propylhalide, 3-(1,1-dimethylpropylthio)-2-methyl-1-propylhalide, 3-(1,1-dimethylpropylthio)-2,2-dimethyl-1-propylhalide, 4-(1,1-dimethylpropylthio)-1-butylhalide, 5-(1,1-dimethylpropylthio)-1-pentylhalide, 6-(1,1-dimethylpropylthio)-1-hexylhalide, 8-(1,1-dimethylpropylthio)-1-octylhalide, 3-(cyclopentylthio)-1-propylhalide, 3-(cyclopentylthio)-2-methyl-1-propylhalide, 3-(cyclopentylthio)-2,2-dimethyl-1-propylhalide, 4-(cyclopentylthio)-1-butylhalide, 5-(cyclopentylthio)-1-pentylhalide, 6-(cyclopentylthio)-1-hexylhalide, 8-(cyclopentylthio)-1-octylhalide, 3-(cyclohexylthio)-1-propylhalide, 3-(cyclohexylthio)-2-methyl-1-propylhalide, 3-(cyclohexylthio)-2,2-dimethyl-1-propylhalide, 4-(cyclohexylthio)-1-butylhalide, 5-(cyclohexylthio)-1-pentylhalide, 6-(cyclohexylthio)-1-hexylhalide, 8-(cyclohexylthio)-1-octylhalide, 3-(t-butyldimethylsilylthio)-1-propylhalide, 3-(t-butyldimethylsilylthio)-2-methyl-1-propylhalide, 3-(t-butyldimethylsilylthio)-2,2-dimethyl-1-propylhalide, 3-(t-butyldimethylsilylthio)-2-methyl-1-propylhalide, 4-(t-butyldimethylsilylthio)-1-butylhalide, 6-(t-butyldimethylsilylthio)-1-hexylhalide and 3-(trimethylsilylthio)-2,2-dimethyl-1-propylhalide. The halo- or halide group is selected from chlorine and bromine.

In another aspect of the invention, the compositions include one or more additives and one or more electrophiles. The electrophiles can, for example, include one or more functionalized alkyl halides (electrophiles). Copending U.S. patent application Serial Nos. 08/872,895, 08/873,220, and 08/893,951, detail the synthesis of telechelic and functionalized star polymers by the reaction of living polymer anions with electrophiles of the following general structure:

$$X\text{-}Z\text{-}T\text{-}(A\text{-}R^1R^2R^3)_m \qquad \text{(III)}$$

wherein X is halogen selected from the group consisting of chloride, bromide and iodide; Z is a branched or straight chain hydrocarbon connecting group which contains 3-25 carbon atoms, optionally containing aryl or substituted aryl groups; T is selected from the group consisting of oxygen, sulfur, and nitrogen groups and mixtures thereof; $(A\text{-}R^1R^2R^3)_m$ is a protecting group in which A is an element selected from Group IVa of the Periodic Table of the Elements, and $R^1$, $R^2$, and $R^3$ are each independently selected from the group consisting of hydrogen, alkyl, substituted alkyl, aryl, substituted aryl, cycloalkyl, and substituted cycloalkyl; and m is 1 when T is oxygen or sulfur, and 2 when T is nitrogen.

Examples of electrophiles of this class include, but are not limited to, 3-(N,N-dimethylamino)-1-chloropropane, 3-(N,N-dimethylamino)-1-bromopropane, 3-(N,N-dimethylamino)-2-methyl-1-chloropropane, 3-(N,N-dimethylamino)-2,2-dimethyl-1-chloropropane, 4-(N,N-dimethylamino)-1-chlorobutane, 5-(N,N-dimethylamino)-1-chloropentane, 3-(N,N-diethylamino)-2-methyl-1-chloropropane, 3-(N-ethyl-N-methylamino)-1-chloropropane, 3-(1,1-dimethylethoxy)-1-chloropropane, 3-(1,1-dimethylethoxy)-1-bromopropane, 3-(1,1-dimethylethoxy)-2-methyl-1-chloropropane, 3-(1,1-dimethylethoxy)-2,2-dimethyl-1-chloropropane, 4-(1,1-dimethylethoxy)-1-chlorobutane, 5-(1,1-dimethylethoxy)-1-chloropentane, 6-(1,1-dimethylethoxy)-1-chlorohexane, 8-(1,1-dimethylethoxy)-1-chlorooctane, 3-(1,1-dimethylpropoxy)-1-chloropropane, 3-(1,1 -dimethylpropoxy)-2-methyl- 1-chloropropane, 3-(1,1 -dimethylpropoxy)-2,2-dimethyl-1-chloropropane, 3-(t-butyldimethylsilyloxy)-1-chloropropane, 3-(t-butyldimethyl-silyloxy)-2-methyl-1-chloropropane, 3-(t-butyldimethylsilyloxy)-2,2-dimethyl-1-chloropropane, 4-(t-butyldimethylsilyloxy)-1-chlorobutane, 4-(t-butyldimethylsilyloxy)-1-iodobutane, 5-(t-butyldimethyl-silyloxy)-1-chloropentane, 6-(t-butyldimethylsilyloxy)-1-chlorohexane, 8-(t-butyldimethylsilyloxy)-1-chlorooctane, 3-(t-butyldiphenylylsilyloxy)-1-chloropropane, 3-(t-butyldiphenylylsilyloxy)-2-methyl-1-chloropropane, 3-(t-butyldiphenylylsilyloxy)-2,2-dimethyl-1-chloropropane, 6-(t-butyldimethylsilyloxy)-1-chlorohexane, 3-(triethylsilyloxy)-2,2-dimethyl-1-chloropropane, 3-(trimethylsilyloxy)-2,2-dimethyl-1-bromopropane and 3-(trimethylsilyloxy)-2,2-dimethyl-1-chloropropane, 3-(methylthio)-1-chloropropane, 3-(methylthio)-1-bromopropane, 3-(methylthio)-2-methyl-1-chloropropane, 3-(methylthio)-2,2-dimethyl-1-chloropropane, 4-(methylthio)-1-chlorobutane, 5-(methylthio)-1-chloropentane, 6-(methylthio)-1-chlorohexane, 8-(methylthio)-1-chlorooctane, 3-(methoxymethylthio)-1-chloropropane, 3-(methoxymethylthio)-2-methyl-1-chloropropane, 3-(methoxymethylthio)-2,2-dimethyl-1-chloropropane, 4-(methoxymethylthio)-1-chlorobutane, 5-(methoxymethylthio)-1-chloropentane, 3-(1,1-dimethylpropylthio)-1-chloropropane, 3-(1,1-dimethylpropylthio)-2-methyl-1-chloropropane, and 3-(t-butyldimethylsilylthio)-1-chloropropane.

Functionalizing agents, or electrophiles, of the formula $X\text{-}Z\text{-}T\text{-}(A\text{-}R^1R^2R^3)_m$ can be prepared as described, for example, in International Publication WO 97/16465. In addition, the electrophiles can be prepared as described in K. Ueda, A. Hirao, and S. Nakahama, Macromolecules, 23, 939 (1990); U.S. Patent No. 5,496,940; U.S. Patent No. 5,600,021; U.S. Patent No. 5,362,699; A. Alexakis, M. Gardette, and S. Colin, Tetrahedron Letters, 29, 1988, 2951; B. Figadere, X. Franck, and A. Cave, Tetrahedron Letters, 34, 1993, 5893; J. Almena, F. Foubelo, and M. Yus, Tetrahedron, 51, 1995, 11883; D.F. Taber and Y. Wang, J. Org. Chem., 58, 1993, 6470; F.D. Toste and I.W. J. Still, Synlett, 1995, 159; and U.S. Patent No. 5,493,044.

Additional electrophiles that are useful in the practice of this invention include:

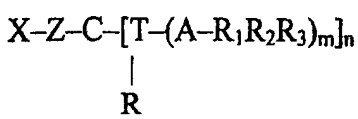

IV

or

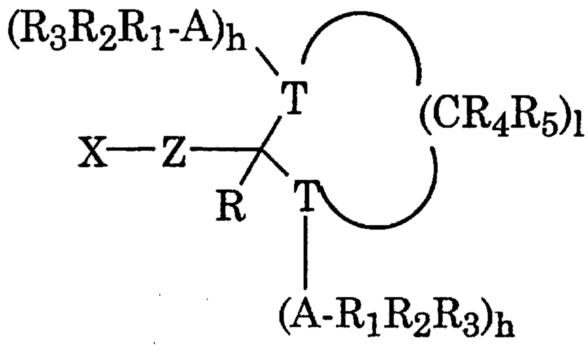

wherein:

X is a halogen selected from chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, nitrogen, and mixtures thereof;
(A - $R_1R_2R_3$) is a protecting group, in which A is an element selected from Group IVa of the Periodic Table of the Elements and $R_1$, $R_2$, and $R_3$ are each independently selected from the group consisting of hydrogen, alkyl, substituted alkyl, aryl, substituted aryl, cycloalkyl, and substituted cycloalkyl;
R, $R_4$, and $R_5$ are each independently selected from the group consisting of hydrogen, alkyl, substituted alkyl, aryl, substituted aryl, cycloalkyl, and substituted cycloalkyl;
h is 0 when T is oxygen or sulfur, and 1 when T is nitrogen;
l is an integer from 1 to 7;
m is 1 when T is oxygen or sulfur, and 2 when T is nitrogen; and
n is 2 or 3.

Examples of electrophiles of this class include, but are not limited to, trimethyl 4-bromoorthobutyrate, trimethyl 3-chloroorthopropionate, 5-chloro-2-pentanone ethylene ketal, triethyl 5-chloroorthopentanoate, N-3-chloropropyl-2,2,5,5-tetramethyl-2,5-disila-1-azapentane, and the like and mixtures thereof.

These electrophiles can be prepared by standard literature procedures. For example, triethyl ortho-3-chloropropionate can be prepared from 3-chloroprionitrile by the method of G. Casy, J. W. Patterson, and R. J. K. Taylor, *Org. Syn. Call. Vol. 8*, 415 (1993). Substituted dimethyl or diethyl dithio acetals and ketals can be prepared from the corresponding halo aldehydes or halo ketones and methylthiol or ethylthiol and HCl catalyst, as described by H. Zinner, *Chem. Ber.,* **83,** 275 (1980). Halo substituted 1,3-dithianes can be synthesized from the corresponding halo carbonyl compound, 1,3-propanedithiol, and boron trifluoride etherate catalyst, as detailed by J. A. Marshall and J. L. Belletire, *Tetrahedron Letters,* 871 (1971). Analogously, halo substituted 1,3-dithiolanes can be synthesized from the corresponding halo carbonyl compound, 1,3-ethanedithiol, and boron trifluoride etherate catalyst, as detailed by R. P. Hatch, J. Shringarpure, and S. M. Weinreb, *J. Org. Chem.,* **43**, 4172 (1978). Substituted dimethyl or diethyl acetals and ketals can be prepared from the corresponding halo aldehydes or halo ketones and methanol or ethanol and anhydrous HCl catalyst, as described by A. F. B. Cameron, J. S. Hunt, J. F. Oughton, P. A. Wilkinson, and B. M. Wilson, *J. Chem. Soc.*, 3864 (1953). The method of R. A. Daignault and E. L. Eliel, *Org. Syn. Col. Vol. V,* 303, (1973), which involves the reaction of a halo-substituted aldehyde or ketone with ethylene glycol, with paratolunesulfonic acid catalyst and azeotropic removal of water, can be employed to prepare the corresponding halo-substituted 1,3-dioxolane. Halo-substituted 1,3-dioxanes can be prepared from the corresponding halo aldehyde or ketone, 1,3-propanediol, paratoluenesulfonic acid catalyst, with azeotropic removal of water, see J. E. Cole, W. S. Johnson, P. A. Robins, and J. Walker, *J. Chem. Soc.,* 244 (1962), and H. Okawara, H. Nakai, and M. Ohno, *Tetrahedron Letters,* **23**, 1087 (1982). The reaction of 2-mercaptoethanol with a halo-substituted aldehyde or ketone, with zinc chloride catalyst affords the commensurate substituted 1,3-oxathiolane, as reported by J. Romo, G. Rosenkranz, and C. Djerassi, *J. Amer. Chem. Soc.*, **73,** 4961 (1951) and V. K. Yadav and A. G. Fallis, *Tetrahedron Letters,* **29**, 897 (1988). Substituted oxazolidines can be synthesized from the corresponding aminoalcohol and a halo-substituted aldehyde or ketone, see E. P. Goldberg and H. R. Nace, *J. Amer. Chem. Soc.,* **77,** 359 (1955). In a similar fashion, the method of A. J. Carpenter and D. J. Chadwick, *Tetrahedron,* **41,** 3803 (1985) can be employed to generate N,N'-dimethylimidazolidines from a halo aldehyde or ketone and N,N'-dimethyl-1,2-ethylenediamine. Higher homologs can be prepared from the parent halo-substituted imidazolidine via dialkylation, see J. C. Craig and R. J. Young, *Org. Syn. Coll. Vol. V*, 88 (1973). N-3-Chloropropyl-2,2,5,5-tetramethyl-2,5-disila-1-azapentane can be prepared by the reaction of 3-chloropropylamine and 1,1,4,4-tetramethyl-1,4-dichlorodisilethylene and an acid acceptor, see S. Djuric, J. Venit, and P. Magnus, *Tetrahedron Letters,* **22**, 1787 (1981).

An additional class of electrophile that is useful in the practice of this invention is described by the general formula:

$$X\text{-}Z\text{-}Si\text{-}[T\text{-}(A\text{-}R_1R_2R_3)_m]_n \qquad (VI)$$

Wherein:

X is halogen selected from the group consisting of chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, and nitrogen groups and mixtures thereof;
A is an element selected from Group IVa of the Periodic Table of the Elements;
$R^1$, $R^2$, and $R^3$ are each independently selected from the group consisting of hydrogen, alkyl, substituted alkyl, aryl, substituted aryl, cycloalkyl, and substituted cycloalkyl;
m is 1 when T is oxygen or sulfur, and 2 when T is nitrogen; and
n is 2 or 3.

Examples of electrophiles of this class include, but are not limited to, 3-chloropropyltrimethoxysilane, chloromethyltriethoxysilane, 4-chlorobutyltrimethoxysilane, 3-chloropropyl-tris(dimethylamino)silane, and the like and mixtures thereof.

Other compounds useful in functionalizing polymeric living polymers include, but are not limited to, alkylene oxides, such as ethylene oxide, propylene oxide, styrene oxide, and oxetane; oxygen; sulfur; carbon dioxide; halogens such as chlorine, bromine and iodine; propargyl halides; alkenylhalosilanes and omega-alkenylarylhalosilanes, such as styrenyldimethyl chlorosilane; sulfonated compounds, such as 1,3-propane sultone; amides, including cyclic amides, such as caprolactam, N-benzylidene trimethylsilylamide, and dimethyl formamide; silicon acetals; 1,5-diazabicyclo [3.1.0]hexane; allyl halides, such as allyl bromide and allyl chloride; methacryloyl chloride; amines, including primary, secondary, tertiary and cyclic amines, such as 3-(dimethylamino)-propyl chloride and N-(benzylidene)trimethylsilylamine; epihalohydrins, such as epichlorohydrin, epibromohydrin, and epiiodohydrin, and other materials as known in the art to be useful for terminating or end capping polymers. These and other useful functionalizing agents are described, for example, in U.S. Patent Nos. 3,786,116 and 4,409,357.

The impact of the additive was initially studied in the functionalization reaction of poly(styryl)lithium. The living polymer anion was treated with 1.5 molar equivalents of 3-(N,N-dimethylamino)-1-chloropropane (Examples 1 and 2). The degree of functionalization was determined by end group titration. The results, tabulated below, indicate that the efficiency of the functionalization reaction increased by approximately 40% by the addition of 1.5 equivalents of dry lithium chloride. Similar results were observed for the functionalization of poly(isoprenyl) lithium (Examples 3 and 4). The functionalization efficiency increased by greater than 25% when the additive, lithium chloride, was employed.

| Example | Sample | $M_n$ | MWD | Additive | Function |
|---|---|---|---|---|---|
| 1 | PS–Nme$_2$ | $4.0 \times 10^3$ | 1.07 | LiCl | 0.92 |
| 2 | PS–Nme$_2$ | $2.2 \times 10^3$ | 1.05 | None | 0.65 |
| 3 | PI–Nme$_2$ | $3.9 \times 10^3$ | 1.08 | LiCl | 1.02 |
| 4 | PI–Nme$_2$ | $1.8 \times 10^3$ | 1.08 | None | 0.81 |

This invention also provides processes for preparing functionalized polymers. In the processes of the invention, an additive as described above is used to improve the functionalization of polymer anions with electrophiles, including alkyl halide electrophiles. The processes for the anionic polymerization of anionically polymerizable monomers comprise initiating polymerization of a conjugated diene hydrocarbon monomer, a mixture of conjugated diene monomers, an alkenylsubstituted aromatic compound, a mixture of alkenylsubstituted aromatic compounds, or a mixture of one or more conjugated diene hydrocarbons and one or more alkenylsubstituted aromatic compounds in a hydrocarbon or mixed hydrocarbon-polar solvent medium at a temperature of 10°C to 150°C with one or more initiators having the formula:

R'-Li

or

$$M\text{-}Q_n\text{-}Z\text{-}T\text{-}(A\text{-}R^7R^8R^9)_m \quad (I)$$

or

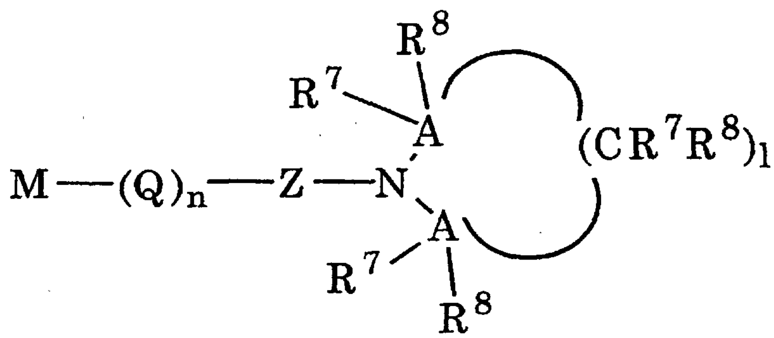

(II)

wherein M, Q, Z, A, R', $R^7$, $R^8$, $R^9$, l, m, and n are as defined above to produce an intermediate living polymer. The monomers can be polymerized singly, sequentially or as a mixture thereof.

The intermediate living polymer is then reacted with one or more electrophiles, such as those described above, in the presence of an additive, also as described above. The resultant linear or branched monofunctional, homotelechelic, heterotelechelic, polymer having one or more terminal functional groups can be recovered.

The additive, or mixture of additives, can be added to the reactor at the beginning of the polymerization, as a component of the initiator composition, during the polymerization, after the polymerization but prior to the functionalization, or as a component of the functionalization formulation.

Monomer(s) to be anionically polymerized to form living polymer anions can be selected from any suitable monomer capable of anionic polymerization, including conjugated alkadienes, alkenylsubstituted aromatic hydrocarbons, and mixtures thereof. Examples of suitable conjugated alkadienes include, but are not limited to, 1,3-butadiene, isoprene, 2,3-dimethyl-1,3-butadiene, 1,3-pentadiene, myrcene, 2-methyl-3-ethyl-1,3-butadiene, 2-methyl-3-ethyl-1,3-pentadiene, 1,3-hexadiene, 2-methyl-1,3-hexadiene, 1,3-heptadiene, 3-methyl-1,3-heptadiene, 1,3-octadiene, 3-butyl-1,3-octadiene, 3,4-dimethyl-1,3-hexadiene, 3-n-propyl-1,3-pentadiene, 4,5-diethyl-1,3-octadiene, 2,4-diethyl-1,3-butadiene, 2,3-di-n-propyl-1,3-butadiene, and 2-methyl-3-isopropyl-1,3-butadiene.

Examples of polymerizable alkenylsubstituted aromatic hydrocarbons include, but are not limited to, styrene, alpha-methylstyrene, vinyltoluene, 2-vinylpyridine, 4-vinylpyridine, 1-vinylnaphthalene, 2-vinylnaphthalene, 1-alpha-methylvinylnaphthalene, 2-alpha-methylvinylnaphthalene, 1,2-diphenyl-4-methyl-1-hexene and mixtures of these, as well as alkyl, cycloalkyl, aryl, alkylaryl and arylalkyl derivatives thereof in which the total number of carbon atoms in the combined hydrocarbon constituents is generally not greater than 18. Examples of these latter compounds include 3-methylstyrene, 3,5-diethylstyrene, 4-*tert*-butylstyrene, 2-ethyl-4-benzylstyrene, 4-phenylstyrene, 4-p-tolylstyrene, 2,4-divinyltoluene and 4,5-dimethyl-1-vinylnaphthalene. U.S. Patent No. 3,377,404, incorporated herein by reference in its entirety, discloses suitable additional alkenylsubstituted aromatic compounds.

The inert solvent is preferably a non-polar solvent such as a hydrocarbon, since anionic polymerization in the presence of such non-polar solvents is known to produce polyenes with high 1,4-contents from 1,3-dienes. Inert hydrocarbon solvents useful in practicing this invention include but are not limited to inert liquid alkanes, cycloalkanes and aromatic solvents and mixtures thereof. Exemplary alkanes and cycloalkanes include those containing five to 10 carbon atoms, such as pentane, hexane, cyclohexane, methylcyclohexane, heptane, methylcycloheptane, octane, decane and the like and mixtures thereof. Exemplary aryl solvents include those containing six to ten carbon atoms,

such as toluene, ethylbenzene, p-xylene, m-xylene, o-xylene, n-propylbenzene, isopropylbenzene, n-butylbenzene, and the like and mixtures thereof.

Polar modifiers can be added to the polymerization reaction to alter the microstructure of the resulting polymer, i.e., increase the proportion of 1,2 (vinyl) microstructure or to promote functionalization or randomization. Examples of polar modifiers include, but are not limited to: diethyl ether, dibutyl ether, tetrahydrofuran (THF), 2-methyltetrahydrofuran, methyl tert-butyl ether (MTBE), diazabicyclo[2.2.2]octane (DABCO), triethylamine, tri-n-butylamine, N,N,N',N'-tetramethylethylenediamine (TMEDA), and 1,2-dimethoxyethane (glyme). The amount of the polar modifier added depends on the vinyl content desired, the nature of the monomer, the temperature of the polymerization, and the identity of the polar modifier.

The polymers can be optionally hydrogenated. Protecting groups when present on the functionalizing agents and/or initiators can also be optionally removed, prior to or following hydrogenation. Removal of the protecting group (s) (deprotection) produces polymers with at least one functional group (e.g. oxygen, sulfur and/or nitrogen) per polymer chain on the ends of the polymer arms. The functional groups can then participate in various copolymerization reactions by reaction of the functional groups on the ends of the polymer arms with selected difunctional or polyfunctional comonomers.

Deprotection can be performed either prior to or after the optional hydrogenation of the residual unsaturation. For example, to remove *tert*-alkyl-protected groups, the protected polymer can be mixed with Amberlyst® 15 ion exchange resin and heated at an elevated temperature, for example 150°C, until deprotection is complete. *Tert*-alkyl-protected groups can also be removed by reaction of the polymer with para-toluensulfonic acid, trifluoroacetic acid, or trimethylsilyliodide. Additional methods of deprotection of the *tert*-alkyl protecting groups can be found in T.W. Greene and P.G.M. Wuts, Protective Groups in Organic Synthesis, Second Edition, Wiley, New York, 1991, page 41.

*Tert*-butyldimethylsilyl protecting groups can be removed by treatment of the copolymer with acid, such as hydrochloric acid, acetic acid, para-toluensulfonic acid, or Dowex® 50W-X8. Alternatively, a source of fluoride ions, for instance tetra-n-butylammonium fluoride, potassium fluoride and 18-crown-6, or pyridine-hydrofluoric acid complex, can be employed for deprotection of the *tert*-butyldimethylsilyl protecting groups. Additional methods of deprotection of the *tert*-butyldimethylsilyl protecting groups can be found in T.W. Greene and P.G.M. Wuts, Protective Groups in Organic Synthesis, Second Edition, Wiley, New York, 1991, pages 80-83.

The progress of the deprotection reactions can be monitored by conventional analytical techniques, such as Thin Layer Chromatography (TLC), Nuclear Magnetic Resonance (NMR) spectroscopy, or InfraRed (IR) spectroscopy.

Hydrogenation techniques are described in U.S. Patent Nos. 4,970,254, 5,166,277, 5,393,843 and 5,496,898, the entire disclosure of each of which is incorporated by reference. The hydrogenation of the polymer is conducted *in situ*, or in a suitable solvent, such as hexane, cyclohexane or heptane. This solution is contacted with hydrogen gas in the presence of a catalyst, such as a nickel catalyst. The hydrogenation is typically performed at temperatures from 25°C to 150°C, with a archetypal hydrogen pressure of 15 psig to 1000 psig. The progress of this hydrogenation can be monitored by InfraRed (IR) spectroscopy or Nuclear Magnetic Resonance (NMR) spectroscopy. The hydrogenation reaction can be conducted until at least 90% of the aliphatic unsaturation has been saturated. The hydrogenated polymer is then recovered by conventional procedures, such as removal of the catalyst with aqueous acid wash, followed by solvent removal or precipitation of the polymer.

The present invention will be further illustrated by the following non-limiting examples.

EXAMPLE 1

Preparation of Dimethylaminopropylpolystyrene

A 250 ml. glass reactor was equipped with two break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The reactor was charged with purified benzene (90 ml.). S-butyllithium, 0.149 grams (2.3 mmole, 1.45 M in cyclohexane, 1.6 mL) was then added via syringe. Purified styrene monomer (9.30 grams, 89.3 mmoles) was added from a break-seal ampoule. The reaction mixture was kept for 6 hours at room temperature. The living poly (styryl)lithium was then transferred into an ampoule and the known amount of residual solution was terminated with degassed methanol from the last ampoule to obtain a base polymer sample. A second 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.133 grams, 3.14 mmols) was added to the second reactor and dried by heating at 150°C for an hour under vacuum. The flask was then allowed to cool to room temperature. The poly(styryl)lithium (90 ml, 2.09 mmols) was transferred to one of the ampoules. The second ampoule was charged with a benzene solution of 3-(N,N-dimethylamino)-1-chloropropane (0.383 grams, 3.14 mmols). The poly(styryl)lithium solution and the solution of 3-(N,N-dimethylamino)-1-chloropropane were added sequentially to the reactor by breaking the corresponding breakseals. The reaction mixture was kept at room temperature for 6 hours with stirring before quenched by addition of degassed methanol from the last break-seal ampoule. The resultant functionalized polymer solution was precipitated into a large amount of methanol and the recovered polymer was air dried for 24 hours.

The resultant base polystyrene polymer was characterized by SEC (polystyrene standards), and had the following properties:

$$M_n = 4.0 \text{ X } 10^3 \text{ g/mole}$$

$$M_w / M_n = 1.07$$

End-group titration of the functionalized polymer indicated that the functionality was 0.92.

Comparative Example

Preparation of Dimethylaminopropylpolystyrene, No Additive

A 250 ml. glass reactor was equipped with two break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The reactor was charged with purified benzene (75 ml.). S-Butyllithium, 0.251 grams (3.9 mmole, 1.45 M in cyclohexane, 2.7 mL) was then added via syringe. Purified styrene monomer (8.50 grams, 81.6 mmoles) was added from a break-seal ampoule. The reaction mixture was kept for 6 hours at room temperature. The living poly (styryl)lithium was then transferred into an ampoule and the known amount of residual solution was terminated with degassed methanol from the last ampoule to obtain a base polymer sample. A second 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The poly(styryl) lithium (75 ml, 3.7 mmols) was transferred to one of the ampoules. The second ampoule was charged with a benzene solution of 3-(N,N-dimethylamino)-1-chloropropane (0.677 grams, 5.55 mmols). The poly(styryl)lithium solution and the solution of 3-(N,N-dimethylamino)-1-chloropropane were added sequentially to the reactor by breaking the corresponding breakseals. The reaction mixture was kept at room temperature for 6 hours with stirring before quenched by addition of degassed methanol from the last break-seal ampoule. The resultant functionalized polymer solution was precipitated into a large amount of methanol and the recovered polymer was air dried for 24 hours.

The resultant base polystyrene polymer was characterized by SEC (polystyrene standards), and had the following properties:

$$M_n = 2.2 \text{ X } 10^3 \text{ g/mole}$$

$$M_w / M_n = 1.05$$

End-group titration of the functionalized polymer indicated that the functionality was 0.65.

EXAMPLE 2

Preparation of Dimethylaminopropylpolyisoprene

A 250 ml. glass reactor was equipped with two break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The reactor was charged with purified cyclohexane (90 ml.). S-Butyllithium, 0.149 grams (2.3 mmole, 1.45 M in cyclohexane, 1.6 mL) was then added via syringe. Purified isoprene monomer (9.00 grams, 132.1 mmoles) was added from a break-seal ampoule. The reaction mixture was kept for 6 hours at room temperature. The living poly(isoprenyl)lithium was then transferred into an ampoule and the known amount of residual solution was terminated with degassed methanol from the last ampoule to obtain a base polymer sample. A second 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.133 grams, 3.14 mmols) was added to the second reactor and dried by heating at 150°C for an hour under vacuum. The flask was then allowed to cool to room temperature. The poly(isoprenyl)lithium (90 ml, 2.09 mmols) was transferred to one of the ampoules. The second ampoule was charged with a cyclohexane solution of 3-(N,N-dimethylamino)-1-chloropropane (0.383 grams, 3.14 mmols). The poly(isoprenyl)lithium solution and the solution of 3-(N,N-dimethylamino)-1-chloropropane were added sequentially to the reactor by breaking the corresponding breakseals. The reaction mixture was kept at room temperature for 6 hours with stirring before quenched by addition of degassed methanol from the last break-seal ampoule. BHT (2,6-di-t-butyl-4-methylphenol, 0.1 wt%) was added to the polymer solution as an antioxidant. The resultant functionalized polymer solution was precipitated into a large amount of methanol and the recovered polymer was air dried for 24 hours.

The resultant base polyisoprene polymer was characterized by SEC (polyisoprene standards), and had the following properties:

$$M_n = 3.9 \text{ X } 10^3 \text{ g/mole}$$

$$M_w / M_n = 1.08$$

End-group titration of the functionalized polymer indicated that the functionality was 1.02.

Comparative Example

Preparation of Dimethylaminopropylpolyisoprene, No Additive

A 250 ml. glass reactor was equipped with two break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The reactor was charged with purified cyclohexane (75 ml.). S-Butyllithium, 0.251 grams (3.9 mmole, 1.45 M in cyclohexane, 2.7 mL) was then added via syringe. Purified isoprene monomer (7.10 grams, 104 mmoles) was added from a break-seal ampoule. The reaction mixture was kept for 6 hours at room temperature. The living poly (isoprenyl)lithium was then transferred into an ampoule and the known amount of residual solution was terminated with degassed methanol from the last ampoule to obtain a base polymer sample. A second 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The poly(isoprenyl) lithium (75 ml, 3.7 mmols) was transferred to one of the ampoules. The second ampoule was charged with a cyclohexane solution of 3-(N,N-dimethylamino)-1-chloropropane (0.677 grams, 5.55 mmols). The poly(isoprenyl)lithium solution and the solution of 3-(N,N-dimethylamino)-1-chloropropane were added sequentially to the reactor by breaking the corresponding breakseals. The reaction mixture was kept at room temperature for 6 hours with stirring before quenched by addition of degassed methanol from the last break-seal ampoule. BHT (2,6-di-t-butyl-4-methylphenol, 0.1 wt%) was added to the polymer solution as an antioxidant. The resultant functionalized polymer solution was precipitated into a large amount of methanol and the recovered polymer was air dried for 24 hours.

The resultant base polyisoprene polymer was characterized by SEC (polyisoprene standards), and had the following properties:

$$M_n = 1.8 \text{ X } 10^3 \text{ g/mole}$$

$$M_w / M_n = 1.08$$

End-group titration of the functionalized polymer indicated that the functionality was 0.81.

EXAMPLE 3

Preparation of Alpha-Hydroxy-Omega-Dimethylaminopropylpolystyrene

A 500 ml. glass reactor was equipped with two break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The reactor was charged with purified benzene (250 ml.). 3-(1,1-Dimethylethoxy)-1-propyllithium, chain extended with two equivalents of isoprene, 0.90 grams (3.5 mmole, 0.52 M in cyclohexane, 6.7 mL) was then added via syringe. Purified styrene monomer (28.15 grams, 89.3 mmoles) was added from a break-seal ampoule. The reaction mixture was kept for 6 hours at room temperature. The living poly(styryl)lithium was divided equally into three calibrated ampoules for reaction with the alkyl chlorides. The residual solution was terminated with degassed methanol from the last ampoule to obtain a base polymer sample. A second 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.041 grams, 0.97 mmols) was added to the second reactor and dried by heating at 150°C for an hour under vacuum. The flask was then allowed to cool to room temperature. The poly(styryl)lithium (80 ml, 0.97 mmols) was transferred to one of the ampoules. The second ampoule was charged with a benzene solution of 3-(N,N-dimethylamino)-1-chloropropane (0.18 grams, 1.46 mmoles). The poly(styryl)lithium solution and the solution of 3-(N,N-dimethylamino)-1-chloropropane were added sequentially to the reactor by breaking the corresponding breakseals. The reaction mixture was kept at room temperature for 6 hours with stirring before quenched by addition of degassed methanol from the last break-seal ampoule. The resultant functionalized polymer solution was precipitated into a large amount of methanol and the recovered polymer was air dried for 24 hours.

The resultant base polystyrene polymer was characterized by SEC (polystyrene standards), and had the following properties:

$$M_n = 8.3 \text{ X } 10^3 \text{ g/mole}$$

$$M_w / M_n = 1.22$$

Examination of the $^1$H NMR indicated the presence of the t-butyl group from the initiator ($\delta$ = 1.17 ppm for the $-OC(C\mathbf{H}_3)_3$) and a dimethylamino group from the electrophile ($\delta$ = 2.20 ppm for the $-N(C\mathbf{H}_3)_2$).

Removal of tertiary butyl group protecting group was effected by reaction of the alpha, omega heterotelechelic functionalized polymer, prepared above, with Amberlyst-15® in cyclohexane for 6 hours under reflux. The resultant alpha-hydroxyl-omega-dimethylaminopropylpolystyrene polymer was isolated and characterized.

End-group titration of the functionalized polymer indicated that the functionality was 0.98. Examination of the $^1$H NMR of this heterotelechelic polymer indicated a dimethylamino ($\delta$ = 2.20 ppm for the $-N(C\mathbf{H}_3)_2$) functionality of 0.91.

EXAMPLE 4

Preparation of Alpha-Hydroxy-Omega-Dimethylethylthiopropylpolystyrene

A 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.041 grams, 0.97 mmols) was added to the reactor and dried by heating at 150°C for an hour under vacuum. The flask was then allowed to cool to room temperature. The poly(styryl)lithium, prepared in Example 3 above, (80 ml, 0.97 mmols) was transferred to one of the ampoules. The second ampoule was charged with a benzene solution of 3-(dimethylethylthio)-1-chloropropane (0.24 grams, 1.46 mmoles). The poly(styryl)lithium solution and the solution of 3-(dimethylethylthio)-1-chloropropane were added sequentially to the reactor by breaking the corresponding breakseals. The reaction mixture was kept at room temperature for 6 hours with stirring before quenched by addition of degassed methanol from the last break-seal ampoule. The resultant functionalized polymer solution was precipitated into a large amount of methanol and the recovered polymer was air dried for 24 hours.

The resultant base polystyrene polymer was characterized by SEC (polystyrene standards), and had the

following properties:

$$M_n = 8.3 \times 10^3 \text{ g/mole}$$

$$M_w/M_n = 1.22$$

Examination of the $^1H$ NMR indicated the presence of the t-butyl group from the initiator (δ = 1.17 ppm for the $-OC(C\mathbf{H}_3)_3$), and the t-butyl group from the electrophile (δ = 1.41 ppm for the $-SC(C\mathbf{H}_3)_3$).

Removal of tertiary butyl group protecting group was effected by reaction of the alpha, omega heterotelechelic functionalized polymer, prepared above, with Amberlyst-15® in cyclohexane for 6 hours under reflux. The resultant alpha-hydroxyl-omega-dimethylethylthiopropylpolystyrene polymer was isolated and characterized.

End-group titration of the functionalized polymer indicated that the functionality was 0.95.

EXAMPLE 5

Preparation of Alpha-Hydroxy-Omega-Aminopropylpolystyrene

A 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.041 grams, 0.97 mmols) was added to the reactor and dried by heating at 150°C for an hour under vacuum. The flask was then allowed to cool to room temperature. The poly(styryl)lithium, prepared in Example 3 above, (80 ml, 0.97 mmols) was transferred to one of the ampoules. The second ampoule was charged with a benzene solution of N-3- chloropropyl-2,2,5,5-tetramethyl-2,5-disila-1-azapentane (0.388 grams, 1.46 mmoles). The poly(styryl)lithium solution and the solution of N-3- chloropropyl-2,2,5,5-tetramethyl-2,5-disila-1-azapentane were added sequentially to the reactor by breaking the corresponding breakseals. The reaction mixture was kept at room temperature for 6 hours with stirring. A small sample was withdrawn with a syringe through the sample port for $^1H$ NMR analysis. Degassed methanol was then added from the remaining break-seal ampoule. The resultant functionalized polymer solution was precipitated into a large amount of methanol. The silyl protecting group was removed by washing the polymer cement five times with methanol and the recovered polymer was air dried for 24 hours.

The resultant base polystyrene polymer was characterized by SEC (polystyrene standards), and had the following properties:

$$M_n = 8.3 \times 10^3 \text{ g/mole}$$

$$M_w / M_n = 1.22$$

Examination of the $^1H$ NMR of this heterotelechelic polymer (prior to deprotection) indicated the presence of the t-butyl group from the initiator (δ = 1.17 ppm for the $-OC(C\mathbf{H}_3)_3$) and indicated a silicon protecting group (δ = 0.08 ppm for the $-Si(C\mathbf{H}_3)_2-$) functionality of 0.99.

Removal of tertiary butyl group protecting group was effected by reaction of the alpha, omega heterotelechelic functionalized polymer, prepared above, with Amberlyst-15® in cyclohexane for 6 hours under reflux. The resultant alpha-hydroxyl-omega-aminopropylpolystyrene polymer was isolated and characterized.

End-group titration of the functionalized polymer indicated that the functionality was 1.02.

EXAMPLE 6

Preparation of Alpha-Hydroxy-Omega-Dimethylaminopropylpolyisoprene

A 500 ml. glass reactor was equipped with two break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. The reactor was charged with purified cyclohexane (300 ml.). 3-(1,1-Dimethylethoxy)-1-propyllithium, chain extended with two equivalents of isoprene, 1.81 grams (7.0 mmole, 0.52 M in cyclohexane, 13.5 mL) was

then added via syringe. Purified isoprene monomer (23.15 grams, 340 mmoles) was added from a break-seal ampoule. The reaction mixture was kept for 6 hours at room temperature. The living poly(isoprenyl)lithium was divided equally into three calibrated ampoules for reaction with the alkyl chlorides. The residual solution was terminated with degassed methanol from the last ampoule to obtain a base polymer sample. A second 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.128 grams, 3.03 mmoles) was added to the second reactor and dried by heating at 150°C for an hour under vacuum. The flask was then allowed to cool to room temperature. The poly(isoprenyl)lithium (95 ml, 2.02 mmoles) was transferred to one of the ampoules. The second ampoule was charged with a cyclohexane solution of 3-(N,N-dimethylamino)-1-chloropropane (0.37 grams, 3.03 mmoles). The poly(isoprenyl)lithium solution and the solution of 3-(N,N-dimethylamino)-1-chloropropane were added sequentially to the reactor by breaking the corresponding breakseals. The reaction mixture was kept at room temperature for 6 hours with stirring before quenched by addition of degassed methanol from the last break-seal ampoule. BHT (2,6-di-t-butyl-4-methylphenol, 0.1 wt%) was added to the polymer solution as an antioxidant. The resultant functionalized polymer solution was precipitated into a large amount of methanol and the recovered polymer was vacuum dried for 24 hours.

The resultant base polyisoprene polymer was characterized by SEC (polyisoprene standards), and had the following properties:

$$M_n = 3.2 \text{ X } 10^3 \text{ g/mole}$$

$$M_w / M_n = 1.06$$

Examination of the $^1$H NMR indicated the presence of the t-butyl group from the initiator (δ = 1.17 ppm for the $-OC(C\mathbf{H}_3)_3$) and a dimethylamino group from the electrophile (δ = 2.20 ppm for the $-N(C\mathbf{H}_3)_2$).

Removal of tertiary butyl group protecting group was effected by reaction of the alpha, omega heterotelechelic functionalized polymer, prepared above, with Amberlyst-15® in cyclohexane for 6 hours under reflux. The resultant alpha-hydroxyl-omega-dimethylaminopropylpolyisoprene polymer was isolated and characterized.

End-group titration of the functionalized polymer indicated that the functionality was 0.92. Examination of the $^1$H NMR of this heterotelechelic polymer indicated a dimethylamino (δ = 2.20 ppm for the $-N(C\mathbf{H}_3)_2$) functionality of 0.90.

EXAMPLE 7

Preparation of Alpha-Hydroxy-Omega-Dimethylethylthioprogylyolyisoprene

A 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.128 grams, 3.03 mmoles) was added to the reactor and dried by heating at 150°C for an hour under vacuum. The flask was then allowed to cool to room temperature. The poly(isoprenyl)lithium, prepared in Example 6 above, (95 ml, 2.02 mmoles) was transferred to one of the ampoules. The second ampoule was charged with a cyclohexane solution of 3-(dimethylethylthio)-1-chloropropane (0.50 grams, 3.03 mmoles). The poly(isoprenyl)lithium solution and the solution of 3-(dimethylethylthio)-1-chloropropane were added sequentially to the reactor by breaking the corresponding breakseals. The reaction mixture was kept at room temperature for 6 hours with stirring before quenched by addition of degassed methanol from the last break-seal ampoule. BHT (2,6-di-t-butyl-4-methylphenol, 0.1 wt%) was added to the polymer solution as an antioxidant. The resultant functionalized polymer solution was precipitated into a large amount of methanol and the recovered polymer was vacuum dried for 24 hours.

The resultant base polyisoprene polymer was characterized by SEC (polyisoprene standards), and had the following properties:

$$M_n = 3.2 \text{ X } 10^3 \text{ g/mole}$$

$$M_w / M_n = 1.06$$

Examination of the $^1$H NMR indicated the presence of the t-butyl group from the initiator (δ = 1.17 ppm for the $-OC(C\mathbf{H}_3)_3$), and the t-butyl group from the electrophile (δ = 1.41 ppm for the $-SC(C\mathbf{H}_3)_3$).

Removal of tertiary butyl group protecting group was effected by reaction of the alpha, omega heterotelechelic functionalized polymer, prepared above, with Amberlyst-15® in cyclohexane for 6 hours under reflux. The resultant alpha-hydroxyl-omega-dimethylethylthiopropylpolyisoprene polymer was isolated and characterized.

End-group titration of the functionalized polymer indicated that the functionality was 0.96.

EXAMPLE 8

Preparation of Alpha-Hydroxy-Omega-Aminopropylpolyisoprene

A 250 ml. glass reactor was equipped with three break-seal reagent ampoules, a sampling port attached with a Teflon® stopcock, an inlet tube fitted with a septum cap, and a magnetic stir bar. This reactor was flame sealed to a high vacuum line, and evacuated at 120°C for 8 hours. The flask was refilled with dry argon, and allowed to cool to room temperature. Lithium chloride (0.128 grams, 3.03 mmoles) was added to the reactor and dried by heating at 150°C for an hour under vacuum. The flask was then allowed to cool to room temperature. The poly(isoprenyl)lithium, prepared in Example 6 above, (95 ml, 2.02 mmoles) was transferred to one of the ampoules. The second ampoule was charged with a cyclohexane solution of N-3-chloropropyl-2,2,5,5-tetramethyl-2,5-disila-1-azapentane (0.805 grams, 3.03 mmoles). The poly(isoprenyl)lithium solution and the solution of N-3-chloropropyl-2,2,5,5-tetramethyl-2,5-disila-1-azapentane were added sequentially to the reactor by breaking the corresponding breakseals. The reaction mixture was kept at room temperature for 6 hours with stirring. A small sample was withdrawn with a syringe through the sample port for $^1$H NMR analysis. Degassed methanol was then added from the remaining break-seal ampoule. BHT (2,6-di-t-butyl-4-methylphenol, 0.1 wt%) was added to the polymer solution as an antioxidant. The resultant functionalized polymer solution was precipitated into a large amount of methanol. The silyl protecting group was removed by washing the polymer cement five times with methanol and the recovered polymer was vacuum dried for 24 hours.

The resultant base polyisoprene polymer was characterized by SEC (polyisoprene standards), and had the following properties:

$$M_n = 3.2 \times 10^3 \text{ g/mole}$$

$$M_w / M_n = 1.06$$

Examination of the $^1$H NMR of this heterotelechelic polymer (prior to deprotection) indicated the presence of the t-butyl group from the initiator (δ = 1.17 ppm for the $-OC(C\mathbf{H}_3)_3$) and indicated a silicon protecting group (δ = 0.08 ppm for the $-Si(C\mathbf{H}_3)_2-$) functionality of 1.02.

Removal of tertiary butyl group protecting group was effected by reaction of the alpha, omega heterotelechelic functionalized polymer, prepared above, with Amberlyst-15® in cyclohexane for 6 hours under reflux. The resultant alpha-hydroxyl-omega-aminopropylpolyisoprene polymer was isolated and characterized.

End-group titration of the functionalized polymer indicated that the functionality was 0.91.

EXAMPLE 9

Preparation of Telechelic Alpha, Omega-Dihydroxy-Polyisoprene

A 1000 ml. glass reactor is equipped with four break-seal reagent ampoules, a sampling port attached with a Teflon® stopcock, an inlet tube fitted with a septum cap, and a magnetic stir bar. This reactor is flame sealed to a high vacuum line, and evacuated at 120°C for 8 hours. The flask is refilled with dry argon, and is allowed to cool to room temperature. Lithium chloride (0.64 grams, 15 mmoles) is added to the reactor and dried by heating at 150°C for an hour under vacuum. The flask is then allowed to cool to room temperature. The reactor is charged with purified cyclohexane (500 ml.). S-Butyllithium, 0.64 grams (10 mmoles, 1.45 M in cyclohexane, 6.9 mL) is then added via syringe. 1,3-Diisopropenylbenzene, 7.91 grams (5 mmoles) is added from a break seal ampoule. The reactor is stirred for sixty minutes at room temperature, to form the dilithium initiator. Purified isoprene monomer (100 grams, 1.468 moles) is added from a break-seal ampoule. The reaction mixture is kept for six hours at room temperature. A solution of 3.13 grams (15 mmoles) 3-(t-butyldimetylsilyloxy)-1-chloropropane is added to the reactor by breaking the corresponding breakseal. The reaction mixture is kept at room temperature for six hours with stirring before quenched by addition of degassed methanol from the last break-seal ampoule. BHT (2,6-di-t-butyl-4-methylphenol, 0.1 wt%) is added

to the polymer solution as an antioxidant. The resultant homotelechelic functionalized polymer solution is precipitated into a large amount of methanol and the recovered polymer was vacuum dried for 24 hours.

The resultant base polyisoprene polymer is characterized by SEC (polyisoprene standards), and has the following properties:

$$M_n = 1.05 \text{ X } 10^4 \text{ g/mole}$$

$$M_w / M_n = 1.06$$

Examination of the $^1$H NMR indicates the presence of the t-butyldimethylsilyl group from the electrophile ($\delta$ = 0.09 ppm for the -Si(C**H**$_3$)$_3$).

Removal of t-butyldimethylsilyl group protecting group is effected by reaction of the alpha, omega homotelechelic functionalized polymer, prepared above, with 1 N HCl in tetrahydrofuran for 6 hours under reflux. The resultant alpha, omega-dihydroxylpolyisoprene polymer is isolated and characterized.

End-group titration of the deprotected, functionalized polymer indicates that the functionality is 1.94.

The foregoing examples are illustrative of the present invention and are not to be construed as limiting thereof. The invention is defined by the following claims.

## Claims

**1.** A composition comprising one or more anionic polymerization initiators and one or more salt additives for increasing the efficiency of reactions between living polymer anions and electrophiles, said salt additive in an amount of at least 0.01 equivalents of the electrophiles and selected from the group consisting of alkali halides, alkali alkoxides, and mixtures thereof.

**2.** The composition of Claim 1, wherein said one or more alkali halides are selected from the group consisting lithium chloride, lithium bromide, lithium iodide, sodium chloride, sodium iodide, potassium chloride, and mixtures thereof.

**3.** The composition of Claim 1, wherein said one or more alkali alkoxides are selected from the group consisting of lithium t-butoxide, lithium s-butoxide, potassium t-butoxide, and mixtures thereof.

**4.** The composition of Claim 1, wherein said at least one or more initiators is selected from the group consisting of alkyllithium initiators, functionalized organoalkali metal initiators, and mixtures thereof.

**5.** The composition of Claims 4, wherein said alkyllithium initiators are selected from the group consisting of alkyllithium initiators of the formula R'-Li, wherein R' is an aliphatic, cycloaliphatic, or arylsubstituted aliphatic radical, and dilithium initiators.

**6.** The composition of Claim 5, wherein said alkyllithium initiators are selected from the group consisting of methyllithium, ethyllithium, n-propyllithium, 2-propyllithium, n-butyllithium, s-butyllithium, t-butyllithium, n-hexyllithium, 2-ethylhexyllithium, and mixtures thereof.

**7.** The composition of Claim 4, wherein said functionalized initiators are selected from the group consisting of compounds of the formula:

$$M\text{-}Q_n\text{-}Z\text{-}T\text{-}(A\text{-}R^7R^8R^9)_m \qquad \text{(I)}$$

or

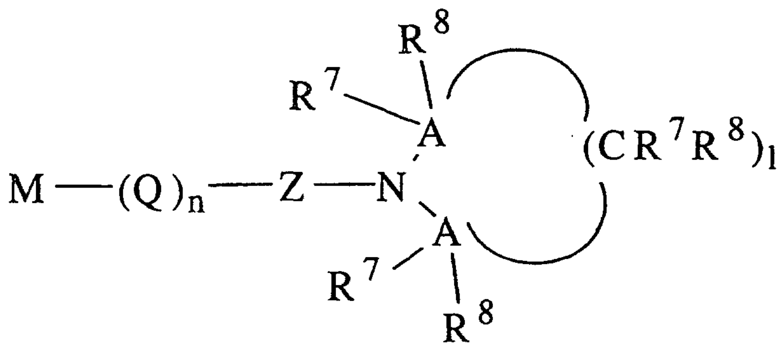

(II)

wherein:

M is an alkali metal selected from the group consisting of lithium, sodium and potassium;
Q is an unsaturated hydrocarbyl group derived by incorporation of one or more conjugated diene hydrocarbons, one or more alkenylsubstituted aromatic compounds, or mixtures of one or more dienes with one or more alkenylsubstituted aromatic compounds into the M-Z linkage;
n is an integer from 0 to 5;
Z is a branched or straight chain hydrocarbon connecting group which contains 3-25 carbon atoms, optionally substituted with aryl or substituted aryl;
T is selected from the group consisting of oxygen, sulfur, and nitrogen groups and mixtures thereof;
$(A\text{-}R^7R^8R^9)_m$ is a protecting group in which A is an element selected from Group IVa of the Periodic Table of the Elements, and $R^7$, $R^8$, and $R^9$ are each independently selected from the group consisting of hydrogen, alkyl, substituted alkyl, aryl, substituted aryl, cycloalkyl, and substituted cycloalkyl;
l is an integer from 1 to 7; and
m is 1 when T is oxygen or sulfur, and 2 when T is nitrogen, and mixtures thereof.

**8.** A composition comprising one or more electrophiles for functionalizing living polymer anions and one or more salt additives for increasing the efficiency of reactions between polymer anions and electrophiles, said salt additive in an amount of at least 0.01 equivalents of the one or more electrophiles and selected from the group consisting of alkali halides, alkali alkoxides, and mixtures thereof.

**9.** The composition of Claim 8, wherein said one or more alkali halides are selected from the group consisting lithium chloride, lithium bromide, lithium iodide, sodium chloride, sodium iodide, potassium chloride, and mixtures thereof.

**10.** The composition of Claim 8, wherein said one or more alkali alkoxides are selected from the group consisting of lithium t-butoxide, lithium s-butoxide, potassium t-butoxide, and mixtures thereof.

**11.** The composition of Claim 8, wherein said one or more electrophiles comprises a compound of the formula

$$X\text{-}Z\text{-}T\text{-}(A\text{-}R^1R^2R^3)_m \qquad (III)$$

wherein:

X is halogen selected from the group consisting of chloride, bromide, and iodide;
Z is a straight chain hydrocarbon connecting group which contains 3-25 carbon atoms, optionally containing aryl or substituted aryl groups; T is selected from the group consisting of oxygen, sulfur, and nitrogen groups and mixtures thereof; $(A\text{-}R^1R^2R^3)_m$ is a protecting group in which A is an element selected from Group IVa of the Periodic Table of the Elements, and $R^1$, $R^2$, and $R^3$ are each independently selected from the group consisting of hydrogen, alkyl, substituted alkyl, aryl, substituted aryl, cycloalkyl, and substituted cycloalkyl; and m is 1 when T is oxygen or sulfur, and 2 when T is nitrogen.

**12.** The composition of Claim 8, wherein said one or more electrophiles comprises a compound of the formula

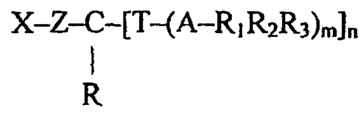

IV

or

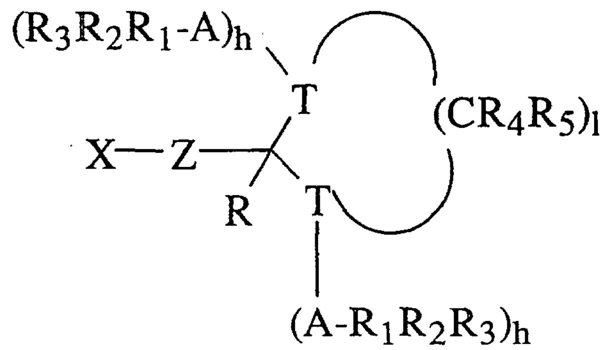

wherein:

X is a halogen selected from chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, nitrogen, and mixtures thereof;
$(A - R_1R_2R_3)$ is a protecting group, in which A is an element selected from Group IVa of the Periodic Table of the Elements and $R_1$, $R_2$, and $R_3$ are each independently selected from the group consisting of hydrogen, alkyl, substituted alkyl, aryl, substituted aryl, cycloalkyl, and substituted cycloalkyl;
R, $R_4$, and $R_5$ are each independently selected from the group consisting of hydrogen, alkyl, substituted alkyl, aryl, substituted aryl, cycloalkyl, and substituted cycloalkyl;
h is 0 when T is oxygen or sulfur, and 1 when T is nitrogen;
l is an integer from 1 to 7;
m is 1 when T is oxygen or sulfur, and 2 when T is nitrogen; and
n is 2 or 3.

**13.** The composition of Claim 8, wherein said one or more electrophiles comprises a compound selected from the group consisting of alkylene oxides; oxygen; sulfur; carbon dioxide; halogens; propargyl halides; alkenylhalosilanes; omega-alkenylarylhalosilanes; sulfonated compounds; amides; silicon acetals; 1,5-diazabicyclo[3.1.0]hexane; allyl halides; methacryloyl chloride; amines; epihalohydrins; and mixtures thereof.

**14.** The composition of Claim 8, wherein said one or more electrophiles comprises a compound of the formula

$$X\text{-}Z\text{-}Si\text{-}[T\text{-}(A\text{-}R_1R_2R_3)_m]_n \qquad (VI)$$

wherein:

X is halogen selected from the group consisting of chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, and nitrogen groups and mixtures thereof;

A is an element selected from Group IVa of the Periodic Table of the Elements;
$R^1$, $R^2$, and $R^3$ are each independently selected from the group consisting of hydrogen, alkyl, substituted alkyl, aryl, substituted aryl, cycloalkyl, and substituted cycloalkyl;
m is 1 when T is oxygen or sulfur, and 2 when T is nitrogen; and
n is 2 or 3.

**15.** A process for improving the efficiency of the coupling reaction between polymer anions and electrophiles, the process comprising reacting one or more living polymer anions with one or more electrophiles in the presence of a salt additive capable of increasing the functionalization reaction in an amount of at least 0.01 equivalents of the one or more electrophiles and selected from the group consisting of alkali halides, alkali alkoxides, and mixtures thereof.

**16.** The process of Claim 15, wherein said one or more alkali halides are selected from the group consisting lithium chloride, lithium bromide, lithium iodide, sodium chloride, sodium iodide, potassium chloride, and mixtures thereof.

**17.** The process of Claim 15, wherein said one or more alkali alkoxides are selected from the group consisting of lithium t-butoxide, lithium s-butoxide, potassium t-butoxide, and mixtures thereof.

**18.** The process of Claim 15, wherein said one or more electrophiles comprises a compound of the formula

$$X\text{-}Z\text{-}T\text{-}(A\text{-}R^1R^2R^3)_m \qquad \text{(III)}$$

wherein X is halogen selected from the group consisting of chloride, bromide and iodide; Z is a branched or straight chain hydrocarbon connecting group which contains 3-25 carbon atoms, optionally containing aryl or substituted aryl groups; T is selected from the group consisting of oxygen, sulfur, and nitrogen groups and mixtures thereof; $(A\text{-}R^1R^2R^3)_m$ is a protecting group in which A is an element selected from Group IVa of the Periodic Table of the Elements, and $R^1$, $R^2$, and $R^3$ are each independently selected from the group consisting of hydrogen, alkyl, substituted alkyl, aryl, substituted aryl, cycloalkyl, and substituted cycloalkyl; and m is 1 when T is oxygen or sulfur, and 2 when T is nitrogen.

**19.** The process of Claim 15, wherein said one or more electrophiles comprises a compound of the formula

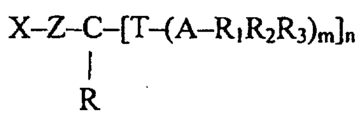

**IV**

or

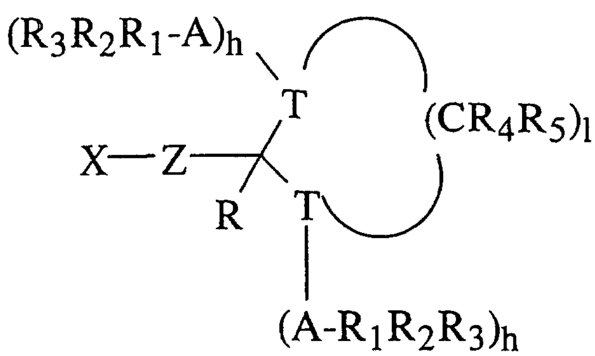

wherein:

X is a halogen selected from chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, nitrogen, and mixtures thereof;
($A - R_1R_2R_3$) is a protecting group, in which A is an element selected from Group IVa of the Periodic Table of the Elements and $R_1$, $R_2$, and $R_3$ are each independently selected from the group consisting of hydrogen, alkyl, substituted alkyl, aryl, substituted aryl, cycloalkyl, and substituted cycloalkyl;
R, $R_4$, and $R_5$ are each independently selected from the group consisting of hydrogen, alkyl, substituted alkyl, aryl, substituted aryl, cycloalkyl, and substituted cycloalkyl;
h is 0 when T is oxygen or sulfur, and 1 when T is nitrogen;
l is an integer from 1 to 7;
m is 1 when T is oxygen or sulfur, and 2 when T is nitrogen; and
n is 2 or 3.

**20.** The process of Claim 15, wherein said one or more electrophiles comprises a compound selected from the group consisting of alkylene oxides; oxygen; sulfur; carbon dioxide; halogens; propargyl halides; alkenylhalosilanes; omega-alkenylarylhalosilanes; sulfonated compounds; amides; silicon acetals; 1,5-diazabicyclo[3.1.0]hexane; allyl halides; methacryloyl chloride; amines; epihalohydrins; and mixtures thereof.

**21.** The process of Claim 15, wherein said one or more electrophiles comprises a compound of the formula

$$X\text{-}Z\text{-}Si\text{-}[T\text{-}(A\text{-}R_1R_2R_3)_m]_n \qquad (VI)$$

wherein:

X is halogen selected from the group consisting of chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, and nitrogen groups and mixtures thereof;
A is an element selected from Group IVa of the Periodic Table of the Elements;
$R^1$, $R^2$, and $R^3$ are each independently selected from the group consisting of hydrogen, alkyl, substituted alkyl, aryl, substituted aryl, cycloalkyl, and substituted cycloalkyl;
m is 1 when T is oxygen or sulfur, and 2 when T is nitrogen; and
n is 2 or 3.

**22.** The process of Claim 15, further comprising prior to said functionalizing step the step of anionically polymerizing one or more anionically polymerizable monomers selected from the group consisting of one or more conjugated diene, one or more alkenylsubstituted aromatic compound, and mixtures of one or more conjugated dienes with one or more alkenylsubstituted aromatic compounds in a hydrocarbon or mixed hydrocarbon-polar solvent medium at a temperature of 10°C to 150°C with one or more functionalized or non-functionalized initiators to form one or more living polymer anions.

**23.** The process of Claim 22, wherein said one or more initiators are selected from the group consisting of dilithium initiators, initiators of the formula R'-Li, wherein R' is an aliphatic, cycloaliphatic, or arylsubstituted aliphatic radical, and initiators of the formula:

$$M\text{-}Q_n\text{-}Z\text{-}T\text{-}(A\text{-}R^7R^8R^9)_m \qquad (I)$$

or

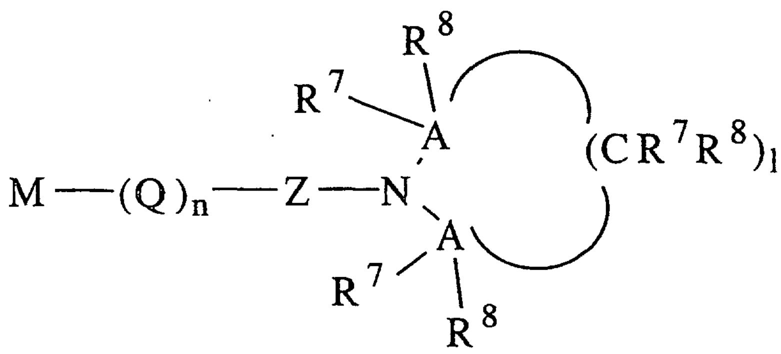

(II)

wherein:

M is an alkali metal selected from the group consisting of lithium, sodium and potassium;
Q is an unsaturated hydrocarbyl group derived by incorporation of one or more conjugated diene hydrocarbons, one or more alkenylsubstituted aromatic compounds, or mixtures of one or more dienes with one or more alkenylsubstituted aromatic compounds into the M-Z linkage;
n is an integer from 0 to 5;
Z is a branched or straight chain hydrocarbon connecting group which contains 3-25 carbon atoms, optionally substituted with aryl or substituted aryl;
T is selected from the group consisting of oxygen, sulfur, and nitrogen groups and mixtures thereof;
$(A\text{-}R^7R^8R^9)_m$ is a protecting group in which A is an element selected from Group IVa of the Periodic Table of the Elements, and $R^7$, $R^8$, and $R^9$ are each independently selected from the group consisting of hydrogen, alkyl, substituted alkyl, aryl, substituted aryl, cycloalkyl, and substituted cycloalkyl;
l is an integer from 1 to 7; and
m is 1 when T is oxygen or sulfur, and 2 when T is nitrogen, and mixtures thereof.

**24.** Electrophiles of the formula:

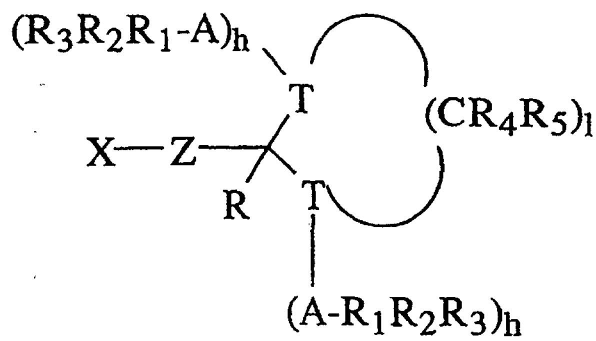

wherein:

X is a halogen selected from chloride, bromide and iodide;
Z is a branched or straight chain hydrocarbon connecting group which contains 1-25 carbon atoms, optionally substituted with aryl or substituted aryl;
T is selected from the group consisting of oxygen, sulfur, nitrogen, and mixtures thereof;
A is an element selected from Group IVa of the Periodic Table of the Elements;
$R_1$, $R_2$, and $R_3$ are each independently selected from the group consisting of hydrogen, alkyl, substituted alkyl, aryl, substituted aryl, cycloalkyl, and substituted cycloalkyl;
R, $R_4$, and $R_5$ are each independently selected from the group consisting of hydrogen, alkyl, substituted alkyl,

aryl, substituted aryl, cycloalkyl, and substituted cycloalkyl;
h is 0 when T is oxygen or sulfur, and 1 when T is nitrogen;
I is an integer from 1 to 7; and
n is 2 or 3, with the proviso that the electrophile does not include compounds in which Z is $-CH_2CH_2-$, each T is oxygen, R, $R_4$, and $R_5$ are each hydrogen and 1 is 2 or 3.

**25.** The composition of Claims 1 or 8, wherein said composition further includes a hydrocarbon solvent.

**26.** The process of Claim 15, wherein said process takes place in a hydrocarbon solvent.

**27.** The process of Claim 15, wherein said process takes place at room temperature.

**Patentansprüche**

**1.** Eine Zusammensetzung enthaltend einen oder mehrere Initiatoren einer anionischen Polymerisation und ein oder mehrere Salzadditive zur Erhöhung der Effizienz von Reaktionen zwischen Anionen lebender Polymere und Elektrophilen, wobei die Salzadditive in einer Menge von wenigstens 0.01 Äquivalenten der Elektrophile vorliegen und ausgewählt sind aus der Gruppe bestehend aus Alkalihalogeniden, Alkalialkoxiden und Mischungen davon.

**2.** Die Zusammensetzung nach Anspruch 1, wobei das eine Alkalihalogenid oder die mehreren Alkalihalogenide ausgewählt sind aus der Gruppe bestehend aus Lithiumchlorid, Lithiumbromid, Lithiumiodid, Natriumchlorid, Natriumiodid, Kaliumchlorid und Mischungen davon.

**3.** Die Zusammensetzung nach Anspruch 1, wobei das eine Alkalialkoxid oder die mehreren Alkalialkoxide ausgewählt sind aus der Gruppe bestehend aus Lithium-t-butoxid, Lithium-s-butoxid, Kalium-t-butoxid und Mischungen davon.

**4.** Die Zusammensetzung nach Anspruch 1, in der der wenigstens eine Initiator oder die mehreren Initiatoren ausgewählt sind aus der Gruppe bestehend aus Alkyllithiuminitiatoren, funktionalisierten Organoalkalimetall-Initiatoren und Mischungen davon.

**5.** Die Zusammensetzung nach Anspruch 4, wobei die Alkyllithiuminitiatoren ausgewählt sind aus der Gruppe bestehend aus Alkyllithiuminitiatoren der Formel R'-Li, in der R' ein aliphatischer, cycloaliphatischer oder arylsubstituierter aliphatischer Rest ist, und Dilithiuminitiatoren.

**6.** Die Zusammensetzung nach Anspruch 5, wobei die Alkyllithiuminitiatoren ausgewählt sind aus der Gruppe bestehend aus Methyllithium, Ethyllithium, n-Propyllithium, 2-Propyllithium, n-Butyllithium, s-Butyllithium, t-Butyllithium, n-Hexyllithium, 2-Ethylhexyllithium und Mischungen davon.

**7.** Die Zusammensetzung nach Anspruch 4, wobei die funktionalisierten Initiatoren ausgewählt sind aus der Gruppe bestehend aus Verbindungen der Formel:

$$M\text{-}Q_n\text{-}Z\text{-}T\text{-}(A\text{-}R^7R^8R^9)_m \quad (I)$$

oder

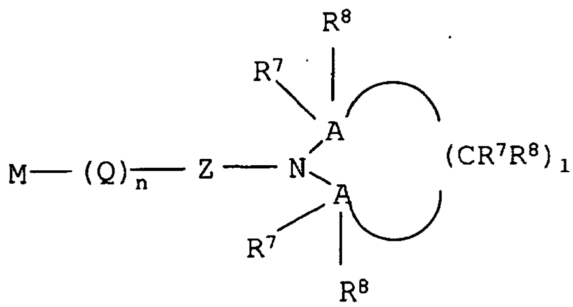

(II)

in der:

M ein Alkalimetall ausgewählt aus der Gruppe bestehend aus Lithium, Natrium und Kalium ist;

Q eine ungesättigte Kohlenwasserstoff-Gruppe ist, welche sich vom Einbau eines oder mehrerer konjugierter Dien-Kohlenwasserstoffe, eines oder mehrerer alkenylsubstituierter aromatischer Verbindungen oder Mischungen eines oder mehrerer Diene mit einer oder mehreren alkenylsubstituierten aromatischen Verbindungen in der M-Z-Bindung ableiten;

n eine ganze Zahl von 0 bis 5 ist;

Z eine verzweigte oder unverzweigte Kohlenwasserstoff-Verbindungsgruppe ist, die 3 - 25 Kohlenstoffatome enthält und wahlweise mit Aryl oder substituiertem Aryl substituiert ist;

T ausgewählt ist aus der Gruppe bestehend aus Sauerstoff-, Schwefel- und Stickstoffgruppen und Mischungen davon;

$(A\text{-}R^7R^8R^9)_m$ eine Schutzgruppe ist, in welcher A ein Element ausgewählt aus der Gruppe IVa des Periodensystems der Elemente ist, und $R^7$, $R^8$ und $R^9$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

l eine ganze Zahl von 1 bis 7 ist; und

m 1 ist, wenn T Sauerstoff oder Schwefel ist, und 2 ist, wenn T Stickstoff ist, und Mischungen davon.

**8.** Eine Zusammensetzung enthaltend ein oder mehrere Elektrophile zum Funktionalisieren von Anionen lebender Polymere und ein oder mehrere Salzadditive zur Erhöhung der Effizienz von Reaktionen zwischen Polymeranionen und Elektrophilen, wobei die Salzadditive in einer Menge von wenigstens 0.01 Äquivalenten des einen oder der mehreren Elektrophilen vorliegen und ausgewählt sind aus der Gruppe bestehend aus Alkalihalogeniden, Alkalialkoxiden und Mischungen davon.

**9.** Die Zusammensetzung nach Anspruch 8, wobei das eine Alkalihalogenid oder die mehreren Alkalihalogenide ausgewählt sind aus der Gruppe bestehend aus Lithiumchlorid, Lithiumbromid, Lithiumiodid, Natriumchlorid, Natriumiodid, Kaliumchlorid und Mischungen davon.

**10.** Die Zusammensetzung nach Anspruch 8, wobei das eine Alkalialkoxid oder die mehreren Alkalialkoxide ausgewählt sind aus der Gruppe bestehend aus Lithium-t-butoxid, Lithium-s-butoxid, Kalium-t-butoxid und Mischungen davon.

**11.** Die Zusammensetzung nach Anspruch 8, wobei das eine Elektrophil oder die mehreren Elektrophile eine Verbindung der Formel

$$X\text{-}Z\text{-}T\text{-}(A\text{-}R^1R^2R^3)_m \qquad (III)$$

enthält, in der:

X ein Halogen ausgewählt aus der Gruppe bestehend aus Chlorid, Bromid und Iodid ist;

Z eine unverzweigte Kohlenwasserstoff-Verbindungsgruppe ist, welche 3 - 25 Kohlenstoffatome und wahlweise Aryl- oder substituierte Aryl-Gruppen enthält; T ausgewählt ist aus der Gruppe bestehend aus Sauerstoff-, Schwefel- und Stickstoffgruppen und Mischungen davon;

$(A\text{-}R^1R^2R^3)_m$ eine Schutzgruppe ist, in welcher A ein Element ausgewählt aus der Gruppe IVa des Periodensystems der Elemente ist, und $R^1$, $R^2$ und $R^3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl; und

m 1 ist, wenn T Sauerstoff oder Schwefel ist, und 2, wenn T Stickstoff ist.

**12.** Die Zusammensetzung nach Anspruch 8, wobei das eine Elektrophil oder die mehreren Elektrophile eine Verbindung der Formel

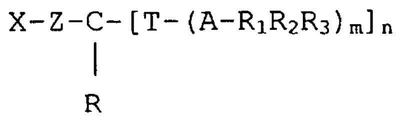

IV

oder

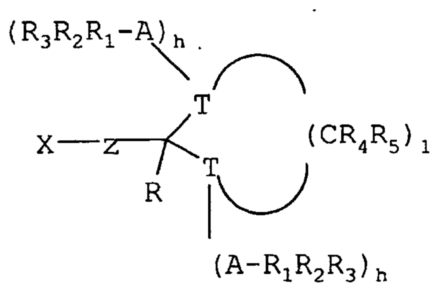

enthält, in der

X ein Halogen ausgewählt aus Chlorid, Bromid und Iodid ist;

Z eine verzweigte oder unverzweigte Kohlenwasserstoff-Verbindungsgruppe ist, die 1 bis 25 Kohlenstoffatome enthält und wahlweise mit Aryl oder substituiertem Aryl substituiert ist;

T ausgewählt ist aus der Gruppe bestehend aus Sauerstoff, Schwefel und Stickstoff und Mischungen davon;

$(A\text{-}R_1R_2R_3)$ eine Schutzgruppe ist, in welcher A ein Element ausgewählt aus der Gruppe IVa des Periodensystems der Elemente ist, und $R_1$, $R_2$ und $R_3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

R, $R_4$ und $R_5$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

h 0 ist, wenn T Sauerstoff oder Schwefel ist, und 1, wenn T Stickstoff ist,;

1 eine ganze Zahl von 1 bis 7 ist;

m 1 ist, wenn T Sauerstoff oder Schwefel ist, und 2 ist, wenn T Stickstoff ist; und

n 2 oder 3 ist.

**13.** Die Zusammensetzung nach Anspruch 8, wobei das eine Elektrophil oder die mehreren Elektrophile eine Verbindung enthalten ausgewählt aus der Gruppe bestehend aus Alkylenoxiden; Sauerstoff; Schwefel; Kohlendioxid; Halogenen; Propargylhalogeniden; Alkenylhalosilanen; omega-Alkenylarylhalosilanen; sulfonierten Verbindungen, Amiden; Siliciumacetalen; 1,5-Diazabicyclo[3.1.0]hexan; Allylhalogeniden; Methacryloylchlorid; Aminen; Epihalohydrinen und Mischungen davon.

**14.** Die Zusammensetzung nach Anspruch 8, wobei das eine Elektrophil oder die mehreren Elektrophile eine Verbindung der Formel

$$X\text{-}Z\text{-}Si\text{-}[T\text{-}(A\text{-}R_1R_2R_3)_m]_n \quad (VI)$$

enthält, in der:

X ein Halogen ist ausgewählt aus der Gruppe bestehend aus Chlorid, Bromid und Iodid;

Z eine verzweigte oder unverzweigte Kohlenwasserstoff-Verbindungsgruppe ist, die 1 - 25 Kohlenstoffatome enthält und wahlweise mit Aryl oder substituiertem Aryl substituiert ist;

T ausgewählt ist aus der Gruppe bestehend aus Sauerstoff-, Schwefel- und Stickstoffgruppen und Mischungen davon;

A ein Element ausgewählt aus der Gruppe IVa des Periodensystems der Elemente ist;

$R^1$, $R^2$ und $R^3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

m 1 ist, wenn T Sauerstoff oder Schwefel ist, und 2, wenn T Stickstoff ist; und

n 2 oder 3 ist.

**15.** Ein Verfahren zur Verbesserung der Effizienz der Kopplungsreaktion zwischen Polymeranionen und Elektrophilen, wobei das Verfahren beinhaltet, dass ein oder mehrere Anionen lebender Polymere mit einem oder mehreren Elektrophilen in der Anwesenheit von Salzadditiven reagiert werden, die fähig sind, die Funktionalisierungsreaktion zu erhöhen, in einer Menge von wenigstens 0.1 Äquivalenten des einen oder der mehreren Elektrophile vorliegen und ausgewählt sind aus der Gruppe bestehend aus Alkalihalogeniden, Alkalialkoxiden und Mischungen davon.

**16.** Das Verfahren nach Anspruch 15, wobei das eine Alkalihalogenid oder die mehreren Alkalihalogenide ausgewählt sind aus der Gruppe bestehend aus Lithiumchlorid, Lithiumbromid, Lithiumiodid, Natriumchlorid, Natriumiodid, Kaliumchlorid und Mischungen davon.

**17.** Das Verfahren nach Anspruch 15, wobei das eine Alkalialkoxid oder die mehreren Alkalialkoxide ausgewählt sind aus der Gruppe bestehend aus Lithium-t-butoxid, Lithium-s-butoxid, Kalium-t-butoxid und Mischungen davon.

**18.** Das Verfahren nach Anspruch 15, wobei das eine Elektrophil oder die mehreren Elektrophile eine Verbindung der Formel

$$X\text{-}Z\text{-}T\text{-}(A\text{-}R^1R^2R^3)_m \qquad (III)$$

enthält, in der:

X ein Halogen ausgewählt aus der Gruppe bestehend aus Chlorid, Bromid und Iodid ist; Z eine verzweigte oder unverzweigte Kohlenwasserstoff-Verbindungsgruppe ist, welche 3 - 25 Kohlenstoffatome und wahlweise Aryl- oder substituierte Aryl-Gruppen enthält; T ausgewählt ist aus der Gruppe bestehend aus Sauerstoff-, Schwefel- und Stickstoffgruppen und Mischungen davon; $(A\text{-}R^1R^2R^3)_m$ eine Schutzgruppe ist, in welcher A ein Element ausgewählt aus der Gruppe IVa des Periodensystems der Elemente ist, und $R^1$, $R^2$ und $R^3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl; und

m 1 ist, wenn T Sauerstoff oder Schwefel ist, und 2 ist, wenn T Stickstoff ist.

**19.** Das Verfahren nach Anspruch 15, wobei das eine Elektrophil oder die mehreren Elektrophile eine Verbindung der Formel

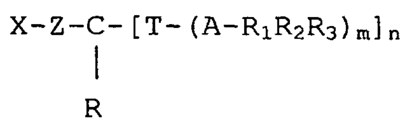

IV

oder

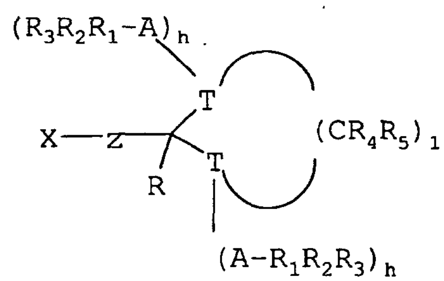

enthält, in der

X ein Halogen ausgewählt aus Chlorid, Bromid und Iodid ist;

Z eine verzweigte oder unverzweigte Kohlenwasserstoff-Verbindungsgruppe ist, die 1 bis 25 Kohlenstoffatome enthält und wahlweise mit Aryl oder substituiertem Aryl substituiert ist;

T ausgewählt ist aus der Gruppe bestehend aus Sauerstoff, Schwefel und Stickstoff und Mischungen davon;

$(A\text{-}R_1R_2R_3)$ eine Schutzgruppe ist, in welcher A ein Element ausgewählt aus der Gruppe IVa des Periodensystems der Elemente ist, und $R_1$, $R_2$ und $R_3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

R, $R_4$ und $R_5$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

h 0 ist, wenn T Sauerstoff oder Schwefel ist, und 1, wenn T Stickstoff ist;

l eine ganze Zahl von 1 bis 7 ist;

m 1 ist, wenn T Sauerstoff oder Schwefel ist, und 2, wenn T Stickstoff ist; und

n 2 oder 3 ist.

**20.** Das Verfahren nach Anspruch 15, wobei das eine Elektrophil oder die mehreren Elektrophile eine Verbindung enthalten ausgewählt aus der Gruppe bestehend aus Alkylenoxiden; Sauerstoff; Schwefel; Kohlendioxid; Halogenen; Propargylhalogeniden; Alkenylhalosilanen; omega-Alkenylarylhalosilanen; sulfonierten Verbindungen, Amiden; Siliciumacetalen; 1,5-Diazabicyclo[3.1.0]hexan; Allylhalogeniden; Methacryloylchlorid; Aminen; Epihalohydrinen und Mischungen davon.

**21.** Das Verfahren nach Anspruch 15, wobei das eine Elektrophil oder die mehreren Elektrophile eine Verbindung der Formel

$$X\text{-}Z\text{-}Si\text{-}[T\text{-}(A\text{-}R_1R_2R_3)_m]_n \quad (VI)$$

enthält, in der:

X ein Halogen ist ausgewählt aus der Gruppe bestehend aus Chlorid, Bromid und Iodid;

Z eine verzweigte oder unverzweigte Kohlenwasserstoff-Verbindungsgruppe ist, die 1 - 25 Kohlenstoffatome enthält und wahlweise mit Aryl oder substituiertem Aryl substituiert ist;

T ausgewählt ist aus der Gruppe bestehend aus Sauerstoff-, Schwefel- und Stickstoffgruppen und Mischungen davon;

A ein Element ausgewählt aus der Gruppe IVa des Periodensystems der Elemente ist;

$R^1$, $R^2$ und $R^3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

m 1 ist, wenn T Sauerstoff oder Schwefel ist, und 2 ist, wenn T Stickstoff ist; und

n 2 oder 3 ist.

**22.** Das Verfahren nach Anspruch 15, weiter enthaltend vor dem Funktionalisierungsschritt den Schritt der anionischen Polymerisation einer oder mehrerer anionisch polymerisierbarer Monomere ausgewählt aus der Gruppe bestehend aus konjugierten Dienen, einer oder mehreren alkenylsubstituierten aromatischen Verbindungen und Mischungen eines oder mehrerer konjugierter Diene mit einer oder mehreren alkenylsubstituierten aromatischen Verbindungen in einem Medium aus Kohlenwasserstoff oder einem gemischten Medium aus Kohlenwasserstoff-polarem Lösungmittel bei einer Temperatur von 10°C bis 150°C mit einem oder mehreren funktionalisierten oder nicht-funktionalisierten Initiatoren, um ein oder mehrere Anionen lebender Polymere zu bilden.

**23.** Das Verfahren nach Anspruch 22, wobei der eine Initiator oder die mehreren Initiatoren ausgewählt sind aus der Gruppe bestehend aus Dilithiuminitiatoren, Initiatoren der Formel R'-Li, in der R' ein aliphatischer, cycloaliphatischer oder aryl-substituierter aliphatischer Rest ist, und Initiatoren der Formel

$$M\text{-}Q_n\text{-}Z\text{-}T\text{-}(A\text{-}R^7R^8R^9)_m \quad (I)$$

oder

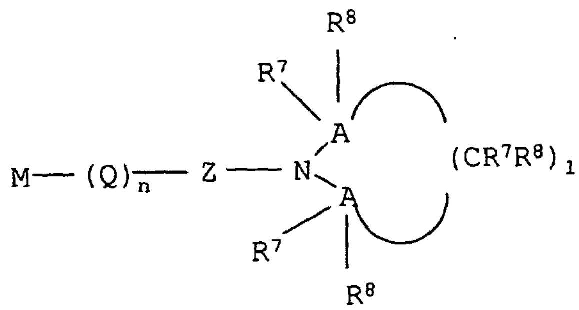

(II)

in der:

M ein Alkalimetall ausgewählt aus der Gruppe bestehend aus Lithium, Natrium und Kalium ist;

Q eine ungesättigte Kohlenwasserstoff-Gruppe ist, welche sich vom Einbau eines oder mehrerer konjugierter Dien-Kohlenwasserstoffe, einer oder mehrerer alkenyl-substituierter aromatischer Verbindungen oder Mischungen eines oder mehrerer Diene mit einer oder mehreren alkenyl-substitiuerten aromatischen Verbindungen in der M-Z-Bindung ableiten;

n eine ganze Zahl von 0 bis 5 ist;

Z eine verzweigte oder unverzweigte Kohlenwasserstoff-Verbindungsgruppe ist, die 3 - 25 Kohlenstoffatome enthält und wahlweise mit Aryl oder substituiertem Aryl substituiert ist;

T ausgewählt ist aus der Gruppe bestehend aus Sauerstoff-, Schwefel- und Stickstoffgruppen und Mischungen davon;

$(A\text{-}R^7R^8R^9)_m$ eine Schutzgruppe ist, in welcher A ein Element ausgewählt aus der Gruppe IVa des Periodensystems der Elemente ist, und $R^7$, $R^8$ und $R^9$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

l eine ganze Zahl von 1 bis 7 ist; und

m 1 ist, wenn T Sauerstoff oder Schwefel ist, und 2 ist, wenn T Stickstoff ist, und Mischungen davon.

**24.** Elektrophile der Formel

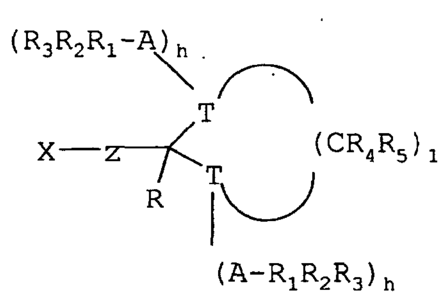

in der:

X ein Halogen ausgewählt aus Chlorid, Bromid und Iodid ist;

Z eine verzweigte oder unverzweigte Kohlenwasserstoff-Verbindungsgruppe ist, die 1 bis 25 Kohlenstoffatome enthält und wahlweise mit Aryl oder substituiertem Aryl substituiert ist;

T ausgewählt ist aus der Gruppe bestehend aus Sauerstoff, Schwefel, Stickstoff und Mischungen davon;

A ein Element ausgewählt aus der Gruppe IVa des Periodensystems der Elemente ist;

$R_1$, $R_2$ und $R_3$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

R, $R_4$ und $R_5$ jedes unabhängig ausgewählt ist aus der Gruppe bestehend aus Wasserstoff, Alkyl, substituiertem Alkyl, Aryl, substituiertem Aryl, Cycloalkyl und substituiertem Cycloalkyl;

h 0 ist, wenn T Sauerstoff oder Schwefel ist, und 1 ist, wenn T Stickstoff ist;

I eine ganze Zahl von 1 bis 7 ist; und

n 2 oder 3 ist, mit dem Vorbehalt, dass das Elektrophil nicht Verbindungen umfasst, in welchen Z $-CH_2CH_2-$ ist, jedes T Sauerstoff ist, R, $R_4$ und $R_5$ alle Wasserstoff sind und I 2 oder 3 ist.

**25.** Die Zusammensetzung der Ansprüche 1 oder 8, wobei die Zusammensetzung weiter ein Kohlenwasserstoff-Lösungsmittel beinhaltet.

**26.** Das Verfahren nach Anspruch 15, wobei das Verfahren in einem Kohlenwasserstoff-Lösungsmittel abläuft.

**27.** Das Verfahren nach Anspruch 15, wobei das Verfahren bei Raumtemperatur abläuft.

## Revendications

**1.** Composition comprenant un ou plusieurs initiateurs de polymérisation anionique et un ou plusieurs additifs salins pour augmenter l'efficacité des réactions entre des anions de polymères vivants et des électrophiles, ledit additif salins étant dans une quantité d'au moins 0,01 équivalents des électrophiles et étant choisi dans le groupe consistant en les halogénures alcalins, les alkoxydes alcalins, et les mélanges de ces composés.

**2.** Composition selon la revendication 1, dans laquelle ledit ou lesdits halogénures alcalins sont choisis dans le groupe consistant en le chlorure de lithium, le bromure de lithium, l'iodure de lithium, le chlorure de sodium, l'iodure de sodium, le chlorure de potassium, et les mélanges de ces composés.

**3.** Composition selon la revendication 1, dans laquelle ledit ou lesdits alkoxydes alcalins sont choisis dans le groupe consistant en le t-butoxyde de lithium, le s-butoxyde de lithium, le t-butoxyde de potassium, et les mélanges de ces composés.

**4.** Composition selon la revendication 1, dans laquelle ledit (ou un desdits) initiateur(s) est (sont) choisi(s) dans le groupe consistant en les initiateurs d'alkyllithium, les initiateurs de métaux organoalcalins fonctionnalisés, et les mélanges de ces composés.

**5.** Composition selon la revendication 4, dans laquelle lesdits initiateurs d'alkyllithium sont choisis dans le groupe consistant en les initiateurs d'alkyllithium répondant à la formule R'-Li, dans laquelle R' représente un radical aliphatique, cycloaliphatique, ou aliphatique substitué par un groupe aryle, et les initiateurs dilithiés.

**6.** Composition selon la revendication 5, dans laquelle lesdits initiateurs d'alkyllithium sont choisis dans le groupe consistant en le méthyllithium, l'éthyllithium, le n-propyllithium, le 2-propyllithium, le n-butyllithium, le s-butyllithium, le t-butyllithium, le n-hexyllithium, le 2-éthylhexyllithium, et les mélanges de ces composés.

**7.** Composition selon la revendication 4, dans laquelle lesdits initiateurs fonctionnalisés sont choisis dans le groupe

consistant en les composés répondant à la formule :

$$M\text{-}Q_n\text{-}Z\text{-}T\text{-}(A\text{-}R^7R^8R^9)_m \quad (I)$$

ou

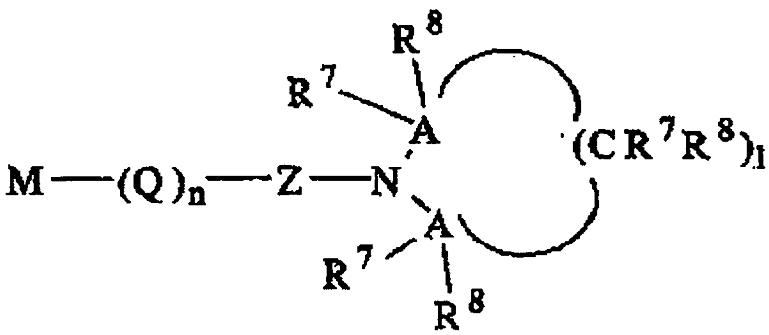

(II)

où:

M représente un métal alcalin choisi dans le groupe consistant en le lithium, le sodium et le potassium ;
Q représente un groupe hydrocarbyle insaturé dérivé de l'incorporation d'un ou de plusieurs hydrocarbures de diènes conjugués, d'un ou de plusieurs composés aromatiques substitués par un groupe alcényle, ou des mélanges d'un ou de plusieurs diènes avec un ou plusieurs composés aromatiques substitués par un groupe alcényle dans la liaison M-Z ;
n représente un nombre entier compris entre 0 et 5 ;
Z représente un groupe connecteur d'hydrocarbures à chaîne linéaire ou ramifiée qui contient de 3 à 25 atomes de carbone, optionnellement substitué avec un groupe aryle ou avec un groupe aryle substitué ;
T est choisi dans le groupe consistant en les groupes oxygène, soufre et azote, et les mélanges de ceux-ci ;
$(A\text{-}R^7R^8R^9)_m$ représente un groupe protecteur dans lequel A représente un élément choisi dans le Groupe IVa du tableau périodique des éléments, et $R^7$, $R^8$, et $R^9$ sont chacun choisis indépendamment dans le groupe consistant en l'hydrogène, et les groupes alkyle, alkyle substitué, aryle, aryle substitué, cycloalkyle, et cycloalkyle substitué ;
l représente un nombre entier compris entre 1 et 7 ; et
m est égal à 1 lorsque T représente un atome d'oxygène ou de soufre, et est égal à 2 lorsque T représente un atome d'azote, et des mélanges de ceux-ci.

**8.** Composition comprenant un ou plusieurs électrophiles pour fonctionnaliser des anions de polymères vivants et un ou plusieurs additifs salins pour augmenter l'efficacité des réactions entre des anions de polymères et des électrophiles, ledit additif salin étant dans une quantité d'au moins 0,01 équivalents du ou des électrophiles et choisi dans le groupe consistant en les halogénures alcalins, les alkoxydes alcalins, et les mélanges de ceux-ci.

**9.** Composition selon la revendication 8, dans laquelle ledit ou lesdits halogénures alcalins sont choisis dans le groupe consistant en le chlorure de lithium, le bromure de lithium, l'iodure de lithium, le chlorure de sodium, l'iodure de sodium, le chlorure de potassium, et les mélanges de ceux-ci.

**10.** Composition selon la revendication 8, dans laquelle ledit ou lesdits alkoxydes alcalins sont choisis dans le groupe consistant en le t-butoxyde de lithium, le s-butoxyde de lithium, le t-butoxyde de potassium, et les mélanges de ceux-ci

**11.** Composition selon la revendication 8, dans laquelle ledit ou lesdits électrophiles comprennent un composé répondant à la formule

$$X\text{-}Z\text{-}T\text{-}(A\text{-}R^1R^2R^3)_m \qquad (III)$$

dans laquelle :

X représente un atome d'halogène choisi dans le groupe consistant en un chlorure, un bromure, et un iodure ; Z représente un groupe connecteur d'hydrocarbures à chaîne linéaire qui contient de 3 à 25 atomes de carbone, et qui contient optionnellement des groupes aryles ou aryles substitués ; T est choisi dans le groupe consistant en les groupes oxygène, soufre et azote et les mélanges de ceux-ci, $(A\text{-}R^1R^2R^3)_m$ représente un groupe protecteur dans lequel A représente un élément choisi dans le Groupe IVa du tableau périodique des éléments, et $R^1$, $R^2$, et $R^3$ sont chacun choisis indépendamment dans le groupe consistant en l'hydrogène, et les groupes alkyle, alkyle substitué, aryle, aryle substitué, cycloalkyle, et cycloalkyle substitué ; et m est égal à 1 lorsque T représente un atome d'oxygène ou de soufre, et est égal à 2 lorsque T représente un atome d'azote.

**12.** Composition selon la revendication 8, dans laquelle ledit ou lesdits électrophiles comprennent un composé répondant à la formule

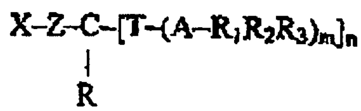

IV

ou

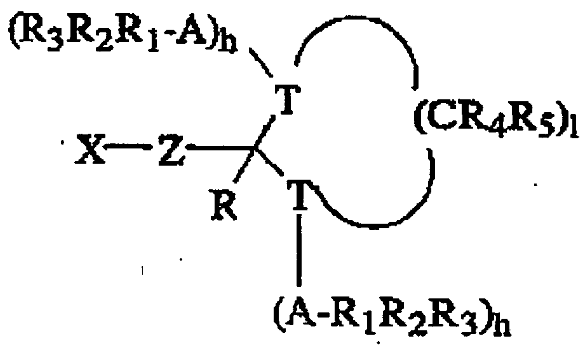

où :

X représente un atome d'halogène choisi parmi un chlorure, un bromure et un iodure ;
Z représente un groupe connecteur d'hydrocarbures à chaîne linéaire ou ramifiée qui contient de 1 à 25 atomes de carbone, optionnellement substitué avec un groupe aryle ou avec un groupe aryle substitué ;
T est choisi dans le groupe consistant en l'oxygène, le soufre, l'azote, et des mélanges de ceux-ci ;
$(A\text{-}R_1R_2R_3)$ représente un groupe protecteur, dans lequel A représente un élément choisi dans le Groupe IVa du tableau périodique des éléments et $R_1$, $R_2$, et $R_3$ sont chacun choisis indépendamment dans le groupe consistant en l'hydrogène, et les groupes alkyle, alkyle substitué, aryle, aryle substitué, cycloalkyle, et cycloalkyle substitué ;
R, $R_4$, et $R_5$ sont chacun choisis indépendamment dans le groupe consistant en l'hydrogène, et des groupes alkyle, alkyle substitué, aryle, aryle substitué, cycloalkyle, et cycloalkyle substitué ;

h est égal à 0 lorsque T représente un atome d'oxygène ou de soufre, et est égal à 1 lorsque T représente un atome d'azote ;
l représente un nombre entier compris entre 1 et 7 ;
m est égal à 1 lorsque T représente un atome d'oxygène ou de soufre, et est égal à 2 lorsque T représente un atome d'azote ; et
n est égal à 2 ou 3.

**13.** Composition selon la revendication 8, dans laquelle ledit ou lesdits électrophiles comprennent un composé choisi dans le groupe consistant en les oxydes d'alkylène ; l'atome d'oxygène ; l'atome de soufre ; le dioxyde de carbone ; les atomes d'halogènes ; les halogénures de propargyle ; les alcénylhalogénosilanes ; les oméga-alcénylarylhalogénosilanes ; les composés sulfonés ; les amides ; les acétals de silicium ; le 1,5-diazabicyclo [3.1.0]hexane ; les halogénures d'allyle ; le chlorure de méthacryloyle ; les aminés ; les épihalogénohydrines ; et les mélanges de ceux-ci ;

**14.** Composition selon la revendication 8, dans laquelle ledit ou lesdits électrophiles comprennent un composé répondant à la formule

$$X\text{-}Z\text{-}Si\text{-}[T\text{-}(A\text{-}R_1R_2R_3)_m]_n \qquad (VI)$$

dans laquelle :

X représente un atome d'halogène choisi dans le groupe consistant en un chlorure, un bromure et un iodure ;
Z représente un groupe connecteur d'hydrocarbures à chaîne droite ou ramifiée qui contient de 1 à 25 atomes de carbone, optionnellement substitué avec un groupe aryle ou avec un groupe aryle substitué ;
T est choisi dans le groupe consistant en les groupes oxygène, soufre et azote et les mélanges de ceux-ci ;
A représente un élément choisi dans le groupe IVa du tableau périodique des éléments ;
$R_1$, $R_2$, et $R_3$ sont chacun indépendamment choisis dans le groupe consistant en l'hydrogène, et les groupes alkyle, alkyle substitué, aryle, aryle substitué, cycloalkyle, et cycloalkyle substitué ;
m est égal à 1 lorsque T représente un atome d'oxygène ou de soufre, et est égal à 2 lorsque T représente un atome d'azote ; et
n est égal à 2 ou 3.

**15.** Procédé pour améliorer l'efficacité de la réaction de couplage entre des anions de polymères et les électrophiles, ledit procédé comprenant une étape consistant à faire réagir un ou plusieurs anions de polymères vivants avec un ou plusieurs électrophiles en présence d'un additif de sel capable d'augmenter la réaction de fonctionnalisation dans une quantité d'au moins 0,01 équivalents du ou des électrophiles et choisi dans le groupe consistant en les halogénures alcalins, les alkoxydes alcalins, et les mélanges de ces composés.

**16.** Procédé selon la revendication 15, dans lequel ledit ou lesdits halogénures alcalins sont choisis dans le groupe composé de chlorure de lithium, de bromure de lithium, d'iodure de lithium, de chlorure de sodium, d'iodure de sodium, de chlorure de potassium, et des mélanges de ceux-ci.

**17.** Procédé selon la revendication 15, dans lequel ledit ou lesdits alkoxydes alcalins sont choisis dans le groupe composé de t-butoxyde de lithium, de s-butoxyde de lithium, de t-butoxyde de potassium, et des mélanges de ceux-ci.

**18.** Procédé selon la revendication 15, dans laquelle ledit ou lesdits électrophiles comprennent un composé répondant à la formule

$$X\text{-}Z\text{-}T\text{-}(A\text{-}R^1R^2R^3)_m \qquad (III)$$

dans laquelle X représente un atome d'halogène choisi dans le groupe consistant en un chlorure, un bromure et un iodure ; Z représente un groupe connecteur d'hydrocarbures à chaîne linéaire ou ramifiée qui contient de 3 à 25 atomes de carbone, contenant optionnellement des groupes aryles ou aryles substitués ; T est choisi dans le groupe consistant en les groupes d'oxygène, soufre et azote et des mélanges de ceux-ci ; $(A\text{-}R^1R^2R^3)_m$ représente

un groupe protecteur dans lequel A représente un élément choisi dans le Groupe IVa du tableau périodique des éléments, et $R^1$, $R^2$, et $R^3$ sont chacun choisis indépendamment dans le groupe consistant en l'hydrogène, et les groupes alkyle, alkyle substitué, aryle, aryle substitué, cycloalkyle, et cycloalkyle substitué ; et m est égal à 1 lorsque T représente un atome d'oxygène ou de soufre, et est égal à 2 lorsque T représente un atome d'azote.

**19.** Procédé selon la revendication 15 dans lequel ledit ou lesdits électrophiles comprennent un composé répondant à la formule

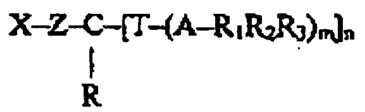

IV

ou

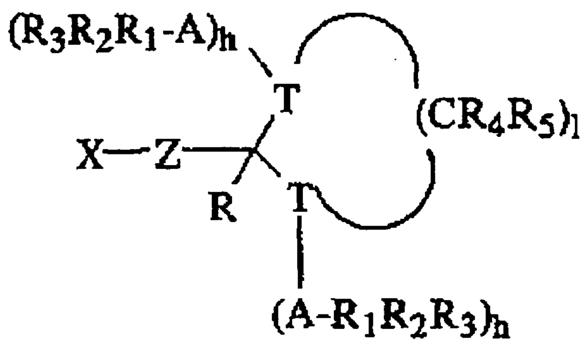

dans laquelle :

X représente un atome d'halogène choisi parmi un chlorure, un bromure et un iodure ;
Z représente un groupe connecteur d'hydrocarbures à chaîne linéaire ou ramifiée qui contient de 1 à 25 atomes de carbone, optionnellement substitué avec un groupe aryle ou avec un groupe aryle substitué ;
T est choisi dans le groupe consistant en l'oxygène, le soufre, l'azote, et les mélanges de ceux-ci ;
($A-R_1R_2R_3$) représente un groupe protecteur, dans lequel A représente un élément choisi dans le Groupe IVa du tableau périodique des éléments et $R_1$, $R_2$, et $R_3$ sont chacun choisis indépendamment dans le groupe consistant en l'hydrogène, et les groupes alkyle, alkyle substitué, aryle, aryle substitué, cycloalkyle, et cycloalkyle substitué ;
R, $R_4$, et $R_5$ sont chacun choisis indépendamment dans le groupe consistant en l'atome d'hydrogène, et les groupes alkyle, alkyle substitué, aryle, aryle substitué, cycloalkyle, et cycloalkyle substitué ;
h est égal à 0 lorsque T représente un atome d'oxygène ou de soufre, et est égal à 1 lorsque T représente un atome d'azote ;
l représente un nombre entier compris entre 1 et 7 ;
m est égal à 1 lorsque T représente un atome d'oxygène ou de soufre, et est égal à 2 lorsque T représente un atome d'azote ; et
n est égal à 2 ou 3.

**20.** Procédé selon la revendication 15, dans lequel ledit ou lesdits électrophiles comprennent un composé choisi dans le groupe consistant en les oxydes d'alkylène ; l'atome d'oxygène ; l'atome de soufre ; le dioxyde de carbone ; les atomes d'halogènes ; les halogénures de propargyle ; les alcénylhalogénosilanes ; les oméga-alcénylarylhalogénosilanes ; les composés sulfonés ; les amides ; les acétals de silicium ; le 1,5-diazabicyclo[3.1.0]hexane ; les halogénures d'allyle ; le chlorure de méthacryloyle ; les aminés ; les épihalogénohydrines ; et les mélanges de ceux-ci ;

**21.** Procédé selon la revendication 15, dans laquelle ledit ou lesdits électrophiles comprennent un composé répondant à la formule

$$X\text{-}Z\text{-}Si\text{-}[T\text{-}(A\text{-}R_1R_2R_3)_m]_n \quad (VI)$$

dans laquelle :

X représente un atome d'halogène choisi dans le groupe consistant en un chlorure, un bromure et un iodure ;
Z représente un groupe connecteur d'hydrocarbures à chaîne linéaire ou ramifiée, qui contient de 1 à 25 atomes de carbone, optionnellement substitué avec un groupe aryle ou avec un groupe aryle substitué ;
T est choisi dans le groupe consistant en les groupes oxygène, soufre et azote, et les mélanges de ceux-ci ;
A représente un élément choisi dans le Groupe IVa du tableau périodique des éléments ;
$R^1$, $R^2$, $R^3$ sont chacun indépendamment choisis dans le groupe consistant en l'hydrogène, et les groupes alkyle, alkyle substitué, aryle, aryle substitué, cycloalkyle, et cycloalkyle substitué ;
m est égal à 1 lorsque T représente un atome d'oxygène ou de soufre, et est égal à 2 lorsque T représente un atome d'azote ; et
n est égal à 2 ou 3.

**22.** Procédé selon la revendication 15, comprenant en outre, préalablement à ladite étape de fonctionnalisation, une étape consistant à polymériser par voie anionique un ou plusieurs monomères polymérisables par voie anionique, choisis dans le groupe consistant en un ou plusieurs diènes conjugués, un ou plusieurs composés aromatiques substitués par un groupe alcényle, et les mélanges d'un ou plusieurs diènes conjugués avec un ou plusieurs composés aromatiques substitués par un groupe alcényle, dans un milieu constitué d'un hydrocarbure ou d'un mélange hydrocarbure-solvant polaire à une température de 10 °C à 150 °C avec un ou plusieurs initiateurs, fonctionnalisés ou non fonctionnalisés, pour former un ou plusieurs anions de polymères vivants.

**23.** Procédé selon la revendication 22, dans lequel ledit ou lesdits initiateurs sont choisis dans le groupe consistant en les initiateurs dilithiés, des initiateurs répondant à la formule R'-Li, dans laquelle R' représente un radical aliphatique, cycloaliphatique, ou aliphatique substitué par un groupe aryle, et des initiateurs répondant à la formule :

$$M\text{-}Qn\text{-}Z\text{-}T\text{-}(A\text{-}R^7R^8R^9)_m \quad (I)$$

ou

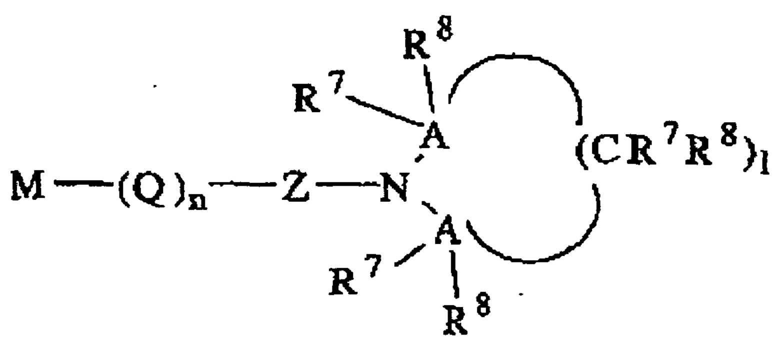

(II)

où :

M représente un métal alcalin choisi dans le groupe consistant en le lithium, le sodium et le potassium ;
Q représente un groupe hydrocarbyle insaturé, dérivé de l'incorporation d'un ou de plusieurs hydrocarbures

de diènes conjugués, d'un ou de plusieurs composés aromatiques substitués par un groupe alcényle, ou des mélanges d'un ou de plusieurs diènes avec un ou plusieurs composés aromatiques substitués par un groupe alcényle dans la liaison M-Z ;
n représente un nombre entier compris entre 0 et 5 ;
Z représente un groupe connecteur d'hydrocarbures à chaîne linéaire ou ramifiée qui contient de 3 à 25 atomes de carbone, optionnellement substitué avec un groupe aryle ou avec un groupe aryle substitué ;
T est choisi dans le groupe consistant en les groupes oxygène, soufre et azote et des mélanges de ceux-ci ;
$(A\text{-}R^7R^8R^9)_m$ représente un groupe protecteur dans lequel A représente un élément choisi dans le Groupe IVa du tableau périodique des éléments, et $R^7$, $R^8$ et $R^9$ sont chacun indépendamment choisis dans le groupe consistant en hydrogène, et les groupes alkyle, alkyle substitué, aryle, aryle substitué, cycloalkyle, et cycloalkyle substitué ;
l représente un nombre entier compris entre 1 et 7 ; et
m est égal à 1 lorsque T représente un atome d'oxygène ou de soufre, et est égal à 2 lorsque T représente un atome d'azote, et des mélanges de ceux-ci.

**24.** Electrophiles répondant à la formule :

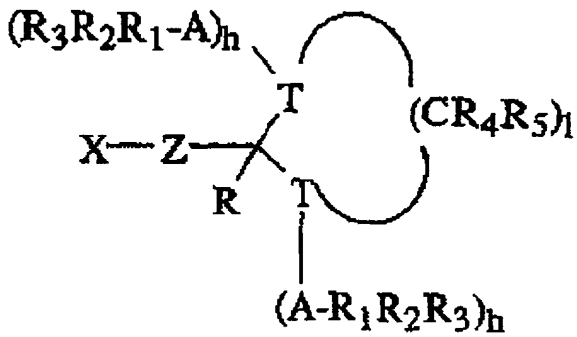

dans laquelle :

X représente un atome d'halogène choisi parmi un chlorure, un bromure et un iodure ;
Z représente un groupe connecteur d'hydrocarbures à chaîne linéaire ou ramifiée qui contient de 1 à 25 atomes de carbone, optionnellement substitué avec un groupe aryle ou avec un groupe aryle substitué ;
T est choisi dans le groupe consistant en l'oxygène, le soufre, l'azote, et des mélanges de ceux-ci ;
A représente un élément choisi dans le Groupe IVa du tableau périodique des éléments ;
$R_1$, $R_2$, et $R_3$ sont chacun choisis indépendamment dans le groupe consistant en l'atome d'hydrogène, et les groupes alkyle, alkyle substitué, aryle, aryle substitué, cycloalkyle, et cycloalkyle substitué ;
R, $R_4$, et $R_5$ sont chacun choisis indépendamment dans le groupe consistant en l'hydrogène, et les groupes alkyle, alkyle substitué, aryle, aryle substitué, cycloalkyle, et cycloalkyle substitué ;
h est égal à 0 lorsque T représente un atome d'oxygène ou de soufre, et est égal à 1 lorsque T représente un atome d'azote ;
l représente un nombre entier compris entre 1 et 7 ; et
n est égal à 2 ou 3, étant entendu que l'électrophile ne comprend pas de composés où Z représente le groupe $-CH_2CH_2-$, où chaque groupement T représente un atome d'oxygène, où R, $R_4$, et $R_5$ représentent chacun un atome d'hydrogène et où l est égal à 2 ou 3.

**25.** Composition selon les revendications 1 ou 8, dans laquelle ladite composition comprend en outre un solvant hydrocarboné.

**26.** Procédé selon la revendication 15, dans lequel ledit procédé est mis en oeuvre dans un solvant hydrocarboné.

**27.** Processus selon la revendication 15, dans lequel ledit procédé est mis en oeuvre à température ambiante.